(19) Europäisches Patentamt
European Patent Office
Office européen des brevets

(11) **EP 3 714 539 B1**

(12) **EUROPÄISCHE PATENTSCHRIFT**

(45) Veröffentlichungstag und Bekanntmachung des Hinweises auf die Patenterteilung:
**30.03.2022   Patentblatt 2022/13**

(21) Anmeldenummer: **19706896.8**

(22) Anmeldetag: **07.02.2019**

(51) Internationale Patentklassifikation (IPC):
**H02M 1/32** (2007.01)      **H02M 7/797** (2006.01)

(52) Gemeinsame Patentklassifikation (CPC):
**H02M 1/32; H02M 7/797**

(86) Internationale Anmeldenummer:
**PCT/EP2019/052976**

(87) Internationale Veröffentlichungsnummer:
**WO 2019/158422 (22.08.2019 Gazette 2019/34)**

(54) **KURZSCHLUSSFESTER UMRICHTER MIT DIREKTER STROMSTEUERUNG**

SHORT CIRCUIT-RESISTANT CONVERTER WITH DIRECT CURRENT CONTROL

CONVERTISSEUR STABLE EN COURT-CIRCUIT À COMMANDE DE COURANT DIRECTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2018   EP 18157423**

(43) Veröffentlichungstag der Anmeldung:
**30.09.2020   Patentblatt 2020/40**

(73) Patentinhaber: **Siemens Aktiengesellschaft 80333 München (DE)**

(72) Erfinder:
• **GÖTZELMANN, Michael 97230 Estenfeld (DE)**
• **WIESSMANN, Harald 91058 Erlangen (DE)**

(56) Entgegenhaltungen:
**US-A1- 2015 036 397      US-A1- 2015 036 397**

• **BOTTRELL NATHANIEL ET AL: "Comparison of Current-Limiting Strategies During Fault Ride-Through of Inverters to Prevent Latch-Up and Wind-Up", IEEE TRANSACTIONS ON POWER ELECTRONICS, INSTITUTE OF ELECTRICAL AND ELECTRONICS ENGINEERS, USA, Bd. 29, Nr. 7, 1. Juli 2014 (2014-07-01), Seiten 3786-3797, XP011540339, ISSN: 0885-8993, DOI: 10.1109/TPEL.2013.2279162 [gefunden am 2014-02-17]**

• **MUKHERJEE SUBHAJYOTI ET AL: "Filter capacitor current estimation and grid current control in LCL based grid connected inverter", 2017 IEEE ENERGY CONVERSION CONGRESS AND EXPOSITION (ECCE), IEEE, 1. Oktober 2017 (2017-10-01), Seiten 3885-3889, XP033247329, DOI: 10.1109/ECCE.2017.8096683**

• **BOTTRELL NATHANIEL ET AL: "Comparison of Current-Limiting Strategies During Fault Ride-Through of Inverters to Prevent Latch-Up and Wind-Up", IEEE TRANSACTIONS ON POWER ELECTRONICS, INSTITUTE OF ELECTRICAL AND ELECTRONICS ENGINEERS, USA, vol. 29, no. 7, 1 July 2014 (2014-07-01), pages 3786-3797, XP011540339, ISSN: 0885-8993, DOI: 10.1109/TPEL.2013.2279162 [retrieved on 2014-02-17]**

• **MUKHERJEE SUBHAJYOTI ET AL: "Filter capacitor current estimation and grid current control in LCL based grid connected inverter", 2017 IEEE ENERGY CONVERSION CONGRESS AND EXPOSITION (ECCE), IEEE, 1 October 2017 (2017-10-01), pages 3885-3889, XP033247329, DOI: 10.1109/ECCE.2017.8096683 [retrieved on 2017-11-03]**

**Beschreibung**

Die vorliegende Erfindung geht aus von einer Steuereinrichtung für einen Umrichter nach dem Anspruch 1.

Die vorliegende Erfindung geht weiterhin aus von einem Steuerprogramm nach dem Anspruch 12 für eine programmierbare Steuereinrichtung für einen Umrichter, wobei das Steuerprogramm Maschinencode umfasst, durch den die Steuereinrichtung derart ausgebildet wird.

Die vorliegende Erfindung geht weiterhin aus von einer Umrichtereinheit nach dem Anspruch 13.

Umrichter und die zugehörigen Steuereinrichtungen sind allgemein bekannt. Sie arbeiten meist nach dem Prinzip, dass die Steuereinrichtung anhand von innerhalb oder hinter der Filtereinrichtung auftretenden Phasenspannungen in Verbindung mit Soll-Phasenspannungen die Ansteuersignale für die Phaseneinheiten des Umrichters ermittelt. Die Ansteuersignale können beispielsweise derart ermittelt werden, dass eine pulsweitenmodulierte Ansteuerung der Phaseneinheiten erfolgt. Die entsprechende Vorgehensweise ist Fachleuten allgemein bekannt. Sie erfolgt in der Regel mittels einer sogenannten Raumzeigermodulation. Mit diesen Vorgehensweisen können die der Last zugeführten Phasenspannungen auf wenige Volt genau geregelt werden.

Bei einer Ermittlung von Soll-Phasenspannungen und einer darauf aufbauenden Ermittlung der Ansteuersignale stellen sich die Phasenströme frei ein. Im Ergebnis werden sie durch die Last bestimmt. Dies ist problemlos, solange die sich einstellenden Phasenströme unterhalb eines maximal zulässigen Maximalwertes liegen. Wird dieser Maximalwert jedoch erreicht oder überschritten, muss der Umrichter im Stand der Technik sehr schnell abgeschaltet werden, um ihn vor Zerstörung zu schützen. Bei den Umrichtern des Standes der Technik werden daher weiterhin die ausgangsseitig des Umrichters fließenden Phasenströme erfasst und von der Steuereinrichtung entgegengenommen. Übersteigen die Phasenströme einen vorbestimmten Maximalwert - beispielsweise weil in der Last ein Kurzschluss aufgetreten ist - wird der Umrichter abgeschaltet.

Die Vorgehensweise des Standes der Technik funktioniert sehr gut, wenn mittels des Umrichters nur eine einzelne, singuläre Last mit elektrischer Energie versorgt wird, beispielsweise ein einzelner Antrieb. In manchen Fällen soll der Umrichter jedoch ein sogenanntes Inselnetz mit elektrischer Energie versorgen, d.h. alle Verbraucher, die innerhalb des entsprechenden Inselnetzes angeordnet sind. Tritt in einem derartigen Fall in einem der Verbraucher ein Kurzschluss und damit ein erhöhter Stromfluss auf, ist es prinzipiell zwar weiterhin möglich, in diesem Fall den Umrichter abzuschalten. Dies führt jedoch dazu, dass nicht nur der defekte Verbraucher abgeschaltet wird, sondern alle Verbraucher des Inselnetzes.

Um ein Abschalten des Umrichters für alle Verbraucher zu vermeiden, werden daher den einzelnen Verbrauchern oder Gruppen von Verbrauchern Abschaltelemente wie beispielsweise Sicherungen oder Leistungsschalter vorgeordnet, die im Kurzschlussfall den Stromfluss vom Umrichter zu dem jeweiligen Verbraucher bzw. zu der jeweiligen Gruppe von Verbrauchern unterbrechen. Der Umrichter selbst wird hingegen nicht abgeschaltet. Der verbleibende Teil des Inselnetzes wird dadurch vom Umrichter weiterhin mit elektrischer Energie versorgt.

Problematisch bei dieser Gestaltung ist, dass die Abschaltelemente üblicherweise Reaktionszeiten im Sekundenbereich (und teilweise sogar darüber) aufweisen. Ein Umrichter ist hingegen nur für wenige Mikrosekunden überlastfähig. Es muss daher durch geeignete Maßnahmen gewährleistet werden, dass die von den Phaseneinheiten in die Phasenleitungen eingespeisten Phasenströme den vom Umrichter maximal verkraftbaren Strom nicht übersteigen.

Eine denkbare Lösung besteht darin, den Umrichter entsprechend auszulegen, so dass er auch die hohen Kurzschlussströme verkraftet. Dies würde jedoch dazu führen, dass der Umrichter für den Normalbetrieb, in dem kein Kurzschluss auftritt, weit überdimensioniert ist. Diese Lösung ist somit nicht wirtschaftlich. In der Praxis müssen daher andere Wege gefunden werden, um den Betrieb des Umrichters auch bei einem Kurzschluss in einem der angeschlossenen Verbraucher aufrechterhalten zu können. Insbesondere müssen somit die in den Phasenleitungen eingespeisten Phasenströme auf geeignete Weise begrenzt werden. Die Phasenströme müssen jedoch so hoch liegen, dass dasjenige Abschaltelement, welches dem defekten Verbraucher vorgeordnet ist, zuverlässig abschaltet. Der Umrichter muss daher mit einer reduzierten Ausgangsspannung weiter betrieben werden. Diese reduzierte Ausgangsspannung muss derart bestimmt sein, dass der Umrichter einerseits die entsprechend hohen Phasenströme liefert, so dass das Abschaltelement auslöst, der Umrichter andererseits aber durch die hohen Phasenströme nicht beschädigt wird.

Die eingangs genannten Gegenstände sind beispielsweise aus dem Fachaufsatz "Comparison of Current-Limiting Strategies During Fault Ride-Through of Inverters to Prevent Latch-Up and Wind-Up" von Nathanial Bottrell et al., veröffentlicht in IEEE Transactions on Power Electronics, volume 29, number 7, July 2014, Seiten 3786 bis 3797, bekannt. Ähnliche Vorgehensweisen sind auch dem Fachaufsatz "Filter Capacitor Current Estimation and Grid Current Control in LCL-based Grid Connected Inverter" von Subhajyoti Mukherjee et al., veröffentlicht in 2017 IEEE Energy Conversion Congress and Exposition (ECCE), Seiten 3885 bis 3889, und der US 2015/0 036 397 A1 zu entnehmen.

Die Aufgabe der vorliegenden Erfindung besteht darin, Möglichkeiten zu schaffen, mittels derer auf einfache und effiziente Weise sowohl ein Normalbetrieb des Umrichters (d.h. die Phasenspannungen liegen mit geringfügigen Abweichungen bei ihren Sollwerten und die eingespeisten Phasenströme liegen unterhalb des Maximalwertes) als auch ein Kurzschlussbetrieb (d.h. die Phasenspannungen werden auf Werte unterhalb ihrer Sollwerte begrenzt, damit die in die Phasenleitungen eingespeisten Phasenströme nicht über den Maximalwert ansteigen) realisiert werden kann. Insbesondere soll ein einfaches und störungsfreies Umschalten zwischen Normalbetrieb und Kurzschlussbetrieb möglich sein.

Die Aufgabe wird durch eine Steuereinrichtung mit den Merkmalen des Anspruchs 1 gelöst. Vorteilhafte Ausgestaltungen der Steuereinrichtung sind Gegenstand der abhängigen Ansprüche 2 bis 13 .

Es werden also Ströme direkt geregelt. Diese Art der Regelung ist hochdynamisch realisierbar. Die direkte Stromregelung kann sowohl im Kurzschlussbetrieb auch im Normalbetrieb wirken. Es muss lediglich im Kurzschlussbetrieb der in der jeweiligen Phasenleitung fließende Phasenstrom auf seinen Maximalwert begrenzt werden.

Die direkte Stromregelung kann beispielsweise nach Art eines Zweipunktreglers arbeiten: Es wird für die zu regelnden Ströme jeweils ein Intervall um den jeweiligen Sollstrom definiert, innerhalb dessen der jeweilige Iststrom liegen soll. Erreicht bzw. unterschreitet der jeweilige Iststrom die obere oder untere Grenze des Intervalls, wird jeweils die Ansteuerung des Umrichters entsprechend geändert. Insbesondere kann beispielsweise durch die jeweilige Phaseneinheit das an die jeweilige Phasenleitung angeschaltete eingangsseitige Potenzial gewechselt werden. Es sind aber auch andere Arten der Regelung denkbar. Insbesondere ist es auch umgekehrt möglich, bei den anderen Phasenleitungen an das an diese Phasenleitungen angeschaltete Potenzial zu wechseln. Denn es kommt darauf an, die Potenzialdifferenz (= die Spannung) zwischen den einzelnen Phasen zu reduzieren. Dafür kann entweder das Potenzial in einer Phasenleitung an die Potenziale in den anderen Phasenleitungen angepasst werden oder aber es können die Potenziale in den anderen Phasenleitungen an das Potenzial in der einen Phasenleitung angepasst werden. Ein bekanntes und auch vorliegend einsetzbares Verfahren zur Stromregelung ist beispielsweise das sogenannte SDHC-Verfahren. SDHC steht für Switched Diamond Hysteresis Control.

Die Filtereinrichtung umfasst - zusätzlich zu den Filterkondensatoren - vorzugsweise vor und hinter den Anschlusspunkten je eine in der jeweiligen Phasenleitung angeordnete Induktivität. Es sind aber auch andere Ausgestaltungen der Filtereinrichtung möglich.

In Einzelfällen ist es möglich, dass der Umrichter nur ein einphasiges Wechselspannungssystem betreibt. In diesem Fall weist der Umrichter zwei Phasenleitungen auf. Im Regelfall betreibt der Umrichter jedoch ein Drehstromsystem mit mindestens drei Phasen, meist exakt drei Phasen. In diesem Fall können die Filterkondensatoren entweder nach Art einer Dreieckschaltung an je zwei Phasenleitungen angeschlossen sein oder nach Art einer Sternschaltung einen gemeinsamen Sternpunkt aufweisen. Im Falle einer Sternschaltung kann das Potenzial des Sternpunkts alternativ relativ zu den eingangsseitigen Potenzialen fest definiert sein oder bezüglich dieser Potenziale schwebend und variabel sein.

Durch die direkte Stromregelung auch im Normalbetrieb ist es weiterhin nicht erforderlich, von einer pulsweitenmodulierten Spannungsregelung, die im Normalbetrieb ausreichend ist, auf eine direkte Stromregelung umzuschalten, die im Kurzschlussbetrieb erforderlich ist. Das Regelverfahren kann vielmehr einheitlich für Normalbetrieb und Kurzschlussbetrieb beibehalten werden. Es ist lediglich erforderlich, die Soll-Phasenströme entsprechend zu begrenzen.

Durch die erfindungsgemäße Art der Regelung ist eine gute Spannungsregelung im Normalbetrieb besonders einfach zu implementieren. Diese Vorgehensweise beruht auf der Überlegung, dass im Normalbetrieb der zeitliche Verlauf der Phasenspannungen bekannt ist und damit auch der zeitliche Verlauf der Filterströme bekannt ist. Somit können die zugehörigen zeitlichen Verläufe der Soll-Filterströme vorgegeben werden und die Filterströme auf ihre Sollwerte geregelt werden. Dadurch stellen sich die Phasenspannungen entsprechend den Sollverläufen ein. Durch das Umschalten auf Regelung der Phasenströme im Kurzschlussbetrieb wird der Umrichter jedoch vor Überlastung geschützt.

Im einfachsten Fall nimmt die Steuereinrichtung die Filterströme selbst als Messgrößen entgegen. Eine direkte Strommessung weist jedoch den Nachteil auf, dass die entsprechende Strommesseinrichtung relativ kostenintensiv ist. Vorzugsweise ermittelt die Steuereinrichtung die Filterströme daher anhand erfasster und von der Steuereinrichtung entgegengenommener Messgrößen. Als weitere Messgrößen kommen insbesondere Phasenspannungen der Phasenleitungen in Frage, die innerhalb oder hinter der Filtereinrichtung gemessen werden. Wenn die Phasenspannungen innerhalb der Filtereinrichtung gemessen werden, können die Filterströme - zumindest in manchen Fällen - direkt anhand der erfassten Phasenspannungen ermittelt werden. Wenn die Phasenspannungen hinter der Filtereinrichtung gemessen werden, können die Filterströme anhand der erfassten Phasenspannungen und der ausgangsseitig des Umrichters erfassten Phasenströme modellgestützt ermittelt werden.

In einer bevorzugten Ausgestaltung weist die Steuereinrichtung eine Recheneinrichtung und eine Extrapolationseinrichtung auf. Die Recheneinrichtung ermittelt die Filterströme. Die Ermittlung erfolgt für einen Zeitpunkt, zu dem die Messgrößen, anhand derer die Filterströme ermittelt werden, erfasst werden. Die Recheneinrichtung führt die von ihr ermittelten Filterströme der Extrapolationseinrichtung zu. Die Extrapolationseinrichtung modifiziert die ihr zugeführten Filterströme derart, dass sie in Bezug auf eine Nennfrequenz der Phasenspannungen um eine Extrapolationszeit extrapoliert sind. Sodann führt die Extrapolationseinrichtung die von ihr modifizierten Filterströme der Umschalteinrichtung zu. Die Extrapolationszeit ist geeignet bestimmt. Sie ist insbesondere derart bestimmt, dass die Modifikationen - bezogen auf eine vorab bekannte Nennfrequenz der Phasenspannungen - die entsprechende zeitliche Veränderung der Filterströme widerspiegeln.

Alternativ ist es möglich, dass die Reihenfolge von Ermittlung mittels der Recheneinrichtung und Extrapolation mittels der Extrapolationseinrichtung vertauscht sind. In diesem Fall modifiziert die Extrapolationseinrichtung die Messgrößen, anhand derer die Filterströme ermittelt werden, derart, dass sie gegenüber einem Zeitpunkt, zu dem die Messgrößen erfasst werden, in Bezug auf eine Nennfrequenz der Phasenspannungen um die Extrapolationszeit extrapoliert sind. Sie führt die von ihr modifizierten Messgrößen der Recheneinrichtung zu. Die Recheneinrichtung ermittelt in diesem Fall anhand der ihr zugeführten modifizierten Messgrößen die Filterströme und führt die Filterströme der Umschalteinrichtung oder zu. Vorzugsweise nimmt die Steuereinrichtung innerhalb oder hinter der Filtereinrichtung erfasste Phasenspannungen der Phasenleitungen entgegen. In diesem Fall sind die Sollwertgeber für die Phasen vorzugsweise als Spannungsregler ausgebildet, denen die erfassten Phasenspannungen und Soll-Phasenspannungen zugeführt werden und die anhand der erfassten Phasenspannungen und der Soll-Phasenspannungen die Soll-Filterströme ermitteln. Dadurch kann auf einfache und zuverlässige Weise die Stabilität der bewirkten Regelung gewährleistet werden.

Die Sollwertgeber sind vorzugsweise Regler mit Integralanteil, insbesondere PI-Regler. Ihre Dynamik ist oftmals relativ gering. In der Regel benötigen die Sollwertgeber zur Ausregelung einer Störung 2 bis 4 Perioden, insbesondere ca. 3 Perioden. Die Perioden sind auf eine Nennfrequenz bezogen, mit der die Phasenspannungen oszillieren sollen.

Vorzugsweise weist die Steuereinrichtung Vorsteuereinrichtungen auf, denen die Soll-Phasenspannungen zugeführt werden und die anhand der Soll-Phasenspannungen Vorsteuerwerte für die von den Sollwertgebern ermittelten Soll-Filterströme ermitteln. In diesem Fall können die Vorsteuerwerte auf die von den Sollwertgebern ermittelten Soll-Filterströme aufgeschaltet werden. Dadurch kann die Dynamik der Führungsgrößenermittlung deutlich verbessert werden, oftmals um 50 % und mehr.

Wie bereits erwähnt, betreibt der Umrichter in der Regel ein Drehstromsystem. Die Anzahl an Phasen beträgt daher mindestens drei. In diesem Fall weist die Steuereinrichtung vorzugsweise eine Spannungsermittlungseinrichtung auf, die die innerhalb oder hinter der Filtereinrichtung erfassten Phasenspannungen der Phasenleitungen entgegennimmt und für die Phasenspannungen jeweils eine auf einen Sternpunkt bezogene Amplitude ermittelt. Weiterhin weist die Steuereinrichtung für die Phasen in diesem Fall jeweils einen Amplitudenregler auf, dem als Istwert die jeweilige Amplitude und als Sollwert der Mittelwert der Amplituden zugeführt werden und der anhand seines jeweiligen Istwerts und seines jeweiligen Sollwerts einen jeweiligen ersten Korrekturwert für den jeweiligen Soll-Filterstrom ermittelt und den jeweiligen Soll-Filterstrom um den jeweiligen ersten Korrekturwert korrigiert. Durch diese Ausgestaltung können die Amplituden der Phasenspannungen aneinander angeglichen werden.

Die Ermittlung der auf den Sternpunkt bezogenen Amplituden ist Fachleuten allgemein bekannt. Sie ist insbesondere auch dann durchführbar, wenn (im Falle einer Dreieckschaltung der Filterkondensatoren) der Sternpunkt nicht vorhanden ist oder aber der Sternpunkt zwar vorhanden ist, aber nicht auf die eingangsseitigen Potenziale bezogen ist. Die Amplitudenregler sind in der Regel Regler mit Integralanteil, insbesondere Integralregler.

Vorzugsweise ermittelt die Spannungsermittlungseinrichtung für die Phasenspannungen auch jeweils einen auf den Sternpunkt bezogenen jeweiligen Gleichspannungsanteil. In diesem Fall weist die Steuereinrichtung für die Phasen jeweils einen Offsetregler auf, der den jeweiligen Gleichspannungsanteil entgegennimmt und der anhand des jeweiligen Gleichspannungsanteils einen jeweiligen zweiten Korrekturwert für den jeweiligen Soll-Filterstrom ermittelt und den jeweiligen Soll-Filterstrom um den ermittelten jeweiligen zweiten Korrekturwert korrigiert. Dadurch kann erreicht werden, dass die Phasenspannungen offsetfrei eingestellt werden.

Die Offsetregler sind in der Regel Regler mit Integralanteil, insbesondere Integralregler.

Zur Ermittlung der Gleichspannungsanteile für die Phasenspannungen nimmt die Spannungsermittlungseinrichtung während eines jeweiligen Erfassungszeitraums jeweils eine Mehrzahl von erfassten Phasenspannungen entgegen und ermittelt den jeweiligen Gleichspannungsanteil als deren jeweiligen Mittelwert. Vorzugsweise bestimmt die Steuereinrichtung den jeweiligen Erfassungszeitraum für die Phasen individuell und unabhängig von den Erfassungszeiträumen für die anderen Phasen. Insbesondere kann die Steuereinrichtung den jeweiligen Erfassungszeitraum mit dem jeweiligen Nulldurchgang der jeweiligen Phasenspannung synchronisieren. Durch diese Vorgehensweise können die Gleichspannungsanteile besonders genau ermittelt werden.

Die Dynamik der verschiedenen Regler ist vorzugsweise derart aufeinander abgestimmt, dass die Offsetregler eine Dynamik aufweisen, die größer als die Dynamik der Amplitudenregler ist. Ein typischer Faktor in der Dynamik liegt in der Regel zwischen 3 und 5. Die Offsetregler weisen jedoch vorzugsweise eine Dynamik auf, die geringer als die Dynamik der Sollwertgeber ist. Ein typischer Faktor in der Dynamik liegt in der Regel zwischen 1/3 und 2/3.

Auch wenn die Offsetregler nicht vorhanden sind, weisen vorzugsweise die Amplitudenregler eine Dynamik auf, die geringer als die Dynamik der Sollwertgeber ist. Die Dynamik der Offsetregler ist im Vergleich zur Dynamik der Sollwertgeber oftmals sehr klein. Ein typischer Faktor liegt zwischen 0,1 und 0,2.

Es ist prinzipiell möglich, dass die Steuereinrichtung ihre verschiedenen Komponenten in Hardware realisiert, insbesondere in Form von ASICs. Vorzugsweise ist die Steuereinrichtung jedoch als programmierbare Steuereinrichtung ausgebildet. Beispielsweise kann die Steuereinrichtung von einem Mikroprozessor gesteuert sein. Alternativ oder zusätzlich kann die Steuereinrichtung Bauelemente enthalten, bei denen durch eine Programmierung die Schaltung als solche festgelegt sind. Typische Beispiele derartiger Bauelemente sind FPGAs (FPGA = field programmable gate array) und PLAs (PLA = programmable logic array).

In diesem Fall ist die Steuereinrichtung mit einem Steuerprogramm programmiert. Das Steuerprogramm umfasst in diesem Fall Maschinencode, durch den die Steuereinrichtung als erfindungsgemäße Steuereinrichtung ausgebildet wird.

Im Falle einer Ausbildung der Steuereinrichtung als programmierbare Steuereinrichtung wird die Aufgabe weiterhin durch ein Steuerprogramm mit den Merkmalen des Anspruchs 12 gelöst. Erfindungsgemäß umfasst das Steuerprogramm Maschinencode, durch den die Steuereinrichtung als erfindungsgemäße Steuereinrichtung ausgebildet wird.

Die Aufgabe wird weiterhin durch eine Umrichtereinheit mit den Merkmalen des Anspruchs 13 gelöst. Erfindungsgemäß ist die Steuereinrichtung der Umrichtereinheit als erfindungsgemäße Steuereinrichtung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung , die in Verbindung mit den Zeichnungen näher erläutert werden. Hierbei zeigen in schematischer Darstellung:

FIG 1      eine Umrichtereinheit,
FIG 2      eine Steuereinrichtung,
FIG 3      ein Ersatzschaltbild,
FIG 4      eine Stromermittlungseinrichtung,
FIG 5      einen Sollwertgeber,
FIG 6      eine weitere Umrichtereinheit,
FIG 7      eine weitere Umrichtereinheit,
FIG 8      einen Teil der Steuereinrichtung von FIG 2,
FIG 9      eine Ergänzung von FIG 9 und
FIG 10    ein Zeitdiagramm.

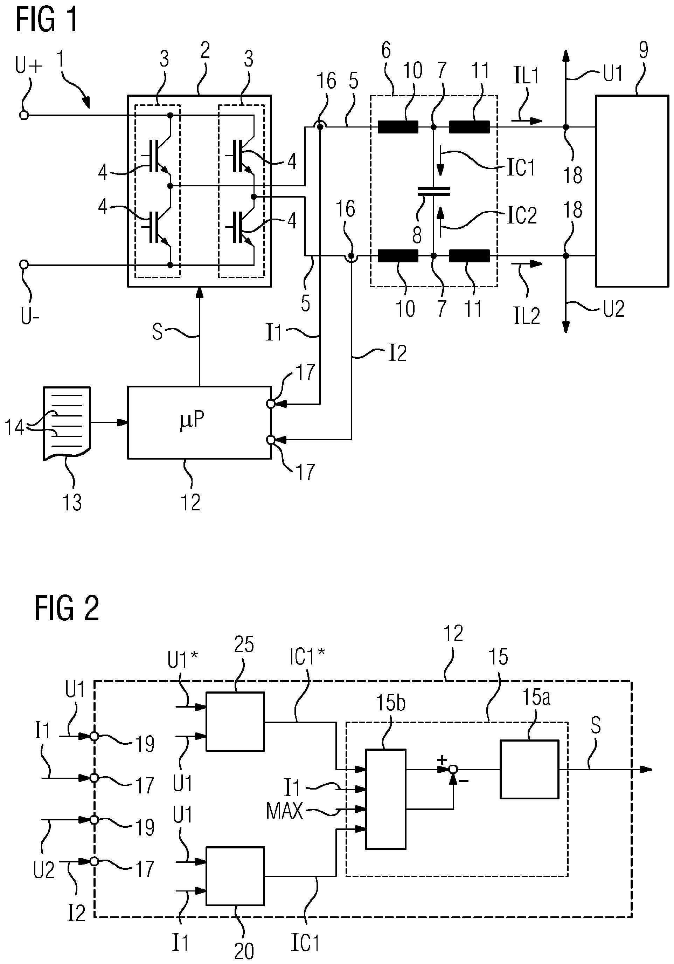

Gemäß FIG 1 weist eine Umrichtereinheit 1 einen Umrichter 2 auf. Dem Umrichter 2 werden eingangsseitig ein hohes Potenzial U+ und ein niedriges Potenzial U- zugeführt. Die Potenziale U+, U- sind in der Regel zeitlich invariant. Sie können aber auch deutlich variieren. Es muss jedoch gewährleistet sein, dass das hohe Potenzial U+ stets höher als das niedrige Potenzial U- ist. Die Potenziale U+, U- können der Umrichtereinheit 1 von außen zugeführt werden. In der Regel werden sie jedoch innerhalb der Umrichtereinheit 1 erzeugt, beispielsweise durch Gleichrichten einer ein- oder mehrphasigen Wechselspannung eines größeren elektrischen Versorgungsnetzes. In diesem Fall ist die Umrichtereinheit 1 als Umrichtereinheit mit einem Gleichspannungszwischenkreis ausgebildet.

Der Umrichter 2 weist eine Anzahl an Phaseneinheiten 3 auf. Die Phaseneinheiten 3 weisen jeweils zwei Schaltelemente 4 auf, die in Reihe geschaltet sind. Zwischen den beiden Schaltelementen 4 der jeweiligen Phaseneinheit 3 ist eine jeweilige Phasenleitung 5 angeschlossen. Über die jeweilige Phaseneinheit 3 schaltet der Umrichter 2 alternierend jeweils eines der Potenziale U+, U- an die Phasenleitungen 5 an und speist dadurch in die Phasenleitungen 5 Phasenströme I1, I2 ein. Pro Phase ist jeweils eine (1) Phaseneinheit 3 und demzufolge auch eine (1) Phasenleitung 5 vorhanden. Die Schaltelemente 4 sind in FIG 1 als IGBTs dargestellt. Diese Ausgestaltung ist üblich. Den Schaltelementen 4 ist in der Regel eine Freilaufdiode parallel gegengeschaltet. Die Freilaufdioden sind in FIG 1 nicht dargestellt.

Auch die Anzahl an Phasen liegt bei der Ausgestaltung gemäß FIG 1 bei zwei, d.h. bei der minimalen Anzahl an Phasen.

Die Umrichtereinheit 1 weist weiterhin eine Filtereinrichtung 6 auf. Die Filtereinrichtung 6 ist dem Umrichter 2 nachgeordnet. Über die Filtereinrichtung 6 werden die Phasenströme I1, I2 geführt. Die Filtereinrichtung 6 weist pro Phasenleitung 5 jeweils einen Anschlusspunkt 7 auf, an dem ein Filterkondensator 8 an die jeweilige Phasenleitung 5 angeschlossen ist. Die Filtereinrichtung 6 dient insbesondere dazu, die pulsförmig an die Phasenleitungen 5 angeschalteten Potenziale U+, U- in einen sinusförmigen Verlauf umzuformen. Der entsprechende sinusförmige Verlauf wird an eine elektrische Last 9 angeschaltet. Die Last 9 kann eine einzelne Last sein. In der Regel handelt es sich jedoch um eine komplexe Last, d.h. die Last 9 besteht aus mehreren, einzeln schaltbaren Verbrauchern. Zwischen der Filtereinrichtung 6 und der Last 9 kann weiterhin ein Transformator vorhanden sein. Dies ist jedoch nicht zwingend erforderlich.

Im Falle der Ausgestaltung gemäß FIG 1 sind die beiden Phasenleitungen 5 über einen einzelnen Filterkondensator 8 miteinander verbunden. Alternativ könnten zwei in Reihe geschaltete Filterkondensatoren 8 vorhanden sein. Die Filtereinrichtung 6 umfasst weiterhin vorzugsweise vor den Anschlusspunkten 7 je eine in der jeweiligen Phasenleitung 5 angeordnete Induktivität 10. Diese Induktivitäten werden nachstehend als vordere Induktivitäten 10 bezeichnet. Die Filtereinrichtung 6 umfasst weiterhin vorzugsweise hinter den Anschlusspunkten 7 je eine in der jeweiligen Phasenleitung 5 angeordnete Induktivität 11. Diese Induktivitäten werden nachstehend als hintere Induktivitäten 11 bezeichnet. Es sind aber auch andere Ausgestaltungen möglich, bei denen die vordere Induktivität 10 oder die hintere Induktivität 11 entfallen. Die Filtereinrichtung 6 kann weiterhin zusätzliche Elemente wie Widerstände, weitere Kondensatoren oder weitere Induktivitäten umfassen.

Über den Filterkondensator 8 bzw. die Filterkondensatoren 8 greift die Filtereinrichtung 6 an den Phasenleitungen 5 Filterströme IC1, IC2 ab. Die verbleibenden Teile der Phasenströme I1, I2 führt die Filtereinrichtung 6 der elektrischen Last 9 als Lastströme IL1, IL2 zu. Zu jedem Zeitpunkt und für jede Phase gilt die Beziehung

$$Ii = ICi + ILi \qquad\qquad (1)$$

(mit i = 1 oder 2 bzw. allgemein i = 1, 2, 3 usw., je nach Anzahl an Phasen).

Der Umrichter 2 weist weiterhin eine Steuereinrichtung 12 auf. Die Steuereinrichtung 12 steuert den Umrichter 2. Die Steuereinrichtung 12 kann ihre Funktionalität durch eine entsprechende Ausgestaltung in Hardware realisieren. Beispielsweise kann die Steuereinrichtung 12 entsprechende diskrete Bauelemente aufweisen. Üblicherweise ist die Steuereinrichtung 12 jedoch als programmierbare Steuereinrichtung ausgebildet. In diesem Fall ist die Steuereinrichtung 12 mit einem Steuerprogramm 13 programmiert. Das Steuerprogramm 13 umfasst Maschinencode, durch den die Steuereinrichtung 12 derart ausgebildet wird, dass die Steuereinrichtung 12 die nachstehend erläuterten Funktionseinheiten und Funktionalitäten implementiert. Dies gilt sowohl für die Basisfunktionalität der Steuereinrichtung 12 als auch für die vorteilhaften Ausgestaltungen der Steuereinrichtung 12.

Es ist, wie in FIG 1 durch die Angabe "μP" innerhalb der Steuereinrichtung 12 angedeutet, möglich, dass die Steuereinrichtung 12 durch einen Mikroprozessor gesteuert wird. In diesem Fall arbeitet der Mikroprozessor den Maschinencode 14 sequenziell ab. Alternativ oder zusätzlich kann die Steuereinrichtung 12 programmierbare Bauelemente enthalten, bei denen durch den Maschinencode 14 die Schaltung dieser Bauelemente als solche statisch festgelegt wird. Typische Beispiele derartiger Bauelemente sind FPGAs und PLAs.

Die Steuereinrichtung 12 weist gemäß FIG 2 eine Regeleinrichtung 15 auf. Die Regeleinrichtung 15 ermittelt die Ansteuersignale S für die Phaseneinheiten 3 (genauer: für die Schaltelemente 4 der Phaseneinheiten 3) und steuert die Phaseneinheiten 3 (genauer: die Schaltelemente 4 der Phaseneinheiten 3) entsprechend an. Die Art und Weise, auf welche die Steuereinrichtung 12 in den verschiedenen Betriebszuständen der Umrichtereinheit 1 die Ansteuersignale S ermittelt, ist der eigentliche Gegenstand der vorliegenden Erfindung.

Ebenso wie im Stand der Technik werden auch im Rahmen der vorliegenden Erfindung mittels entsprechender Stromsensoren 16 (siehe FIG 1) ausgangsseitig des Umrichters 2 die Phasenströme I1, I2 - d.h. die von den Phaseneinheiten 3 in die Phasenleitungen 5 eingespeisten Ströme und damit die die Schaltelemente 4 durchfließenden Ströme - erfasst. Die erfassten Phasenströme I1, I2 (genauer: die entsprechenden Messwerte) werden der Steuereinrichtung 12 über entsprechende Eingänge 17 (siehe FIG 1) zugeführt. Die Steuereinrichtung 12 nimmt die Messwerte entgegen.

Nachfolgend wird in Verbindung mit FIG 2 die Vorgehensweise für einen Phasenstrom I1, I2 erläutert, nämlich den Phasenstrom I1. Für den Phasenstrom I2 gelten analoge Ausführungen.

Die Regeleinrichtung 15 umfasst gemäß FIG 2 einen Stromregler 15a. Der Stromregler 15a führt eine direkte Stromregelung durch. Dem Stromregler 15a ist eine Umschalteinrichtung 15b vorgeordnet. Der Umschalteinrichtung 15b werden der Filterstrom IC1, der zugehörige Soll-Filterstrom IC1*, der Phasenstrom I1 und ein Maximalwert MAX zugeführt.

Im Normalbetrieb führt die Umschalteinrichtung 15b dem Stromregler 15a als Istwert den Filterstrom IC1 zu. Der Normalbetrieb liegt vor, wenn und solange der Betrag des Phasenstroms I1 einen Mindestabstand vom Maximalwert MAX aufweist. In diesem Fall ist der Sollwert der zugehörige Soll-Filterstrom IC1*. Er wird von einem zugehörigen Sollwertgeber 25 bereitgestellt. Das Ausgangssignal des Stromreglers 15a entspricht dem Ansteuersignal S für die entsprechende Phaseneinheit 3. Der Sollwert IC1* ist derart bestimmt, dass der Verlauf der Phasenspannung U1 hinter der Filtereinrichtung 6 eine vorbestimmte Amplitude U0 aufweist, beispielsweise ca. 325 V für eine übliche Netzspannung von 230 V effektiv. Der Sollwert IC1* ist weiterhin auch derart bestimmt, dass der Verlauf der Phasenspannung U1 hinter der Filtereinrichtung 6 einen sinusförmigen Verlauf aufweist.

Die Umschalteinrichtung 15b prüft im Normalbetrieb laufend, ob der in der Phasenleitung 5 fließende Phasenstrom I1 (genauer: dessen Betrag) kleiner als der Maximalwert MAX ist (genauer: einen Mindestabstand von dem Maximalwert MAX aufweist). Solange dies der Fall ist, liegt der Normalbetrieb vor. Wenn und sobald der Phasenstrom I1 (genauer: dessen Betrag) jedoch den Maximalwert MAX erreicht (bzw. den Mindestabstand unterschreitet), schaltet die Umschalteinrichtung 15b in den Kurzschlussbetrieb um. Im Kurzschlussbetrieb führt die Umschalteinrichtung 15b dem Stromregler 15a als Istwert nicht den Filterstrom IC1, sondern den Phasenstrom I1 zu. Als Sollwert führt die Umschalteinrichtung 15b dem Stromregler 15a in diesem Fall nicht den Soll-Filterstrom IC1* zu, sondern den Maximalwert MAX oder das Inverse des Maximalwerts MAX, je nachdem ob die Beziehung I1 = MAX oder die Beziehung I1 = - MAX gilt.

In aller Regel weist die Phasenspannung U1 im Kurzschlussbetrieb hinter der Filtereinrichtung 6 eine Amplitude auf, die kleiner als die vorbestimmte Amplitude U0 ist, beispielsweise nur ca. 25 V. Die Umschalteinrichtung 15b prüft im Kurzschlussbetrieb daher laufend, ob die Amplitude der Phasenspannung U1 wieder die vorbestimmte Amplitude erreicht. Wenn dies der Fall ist, schaltet die Umschalteinrichtung 15b wieder in den Normalbetrieb um.

In aller Regel führt bereits die obenstehend erläuterte Vorgehensweise zu einem stabilen Betrieb. Um in seltenen Einzelfällen jedoch zu vermeiden, dass die Umschalteinrichtung 15b permanent zwischen Normalbetrieb und Kurzschlussbetrieb hin und her schaltet, kann in an sich bekannter Weise vorgesehen werden, ein gewisses Hystereseverhalten mit vorzusehen.

Es ist möglich, dass die Steuereinrichtung 12 den Filterstrom IC1 als Messgröße entgegennimmt. In diesem Fall wird der Filterstrom IC1 mittels eines entsprechenden Stromsensors (in den FIG 1 und 2 nicht dargestellt) direkt erfasst und der Steuereinrichtung 12 zugeführt und steht der Steuereinrichtung 12 somit zur Verfügung.

Vorzugsweise aber ermittelt die Steuereinrichtung 12 den Filterstrom IC1 anhand erfasster und von der Steuereinrichtung 12 entgegengenommener Messgrößen U1, I1.

Insbesondere wird mittels eines entsprechenden Spannungssensors 18 (siehe FIG 1) eine Phasenspannung U1 der entsprechenden Phasenleitung 5 gemessen. Die gemessene bzw. erfasste Phasenspannung U1 (genauer: der entsprechende Messwert) wird entsprechend der Darstellung in FIG 2 der Steuereinrichtung 12 zugeführt. Die Steuereinrichtung 12 nimmt die Phasenspannung U1 über einen entsprechenden Eingang 19 entgegen.

Es ist möglich, dass die Phasenspannung U1 innerhalb der Filtereinrichtung 6 gemessen wird, insbesondere am Anschlusspunkt 7 der entsprechenden Phasenleitung 5. In diesem Fall ermittelt eine Stromermittlungseinrichtung 20 den Filterstrom IC1 direkt über die Kapazität C des Filterkondensators 8:

$$IC1 = C \cdot \frac{dU1}{dt} \qquad (2)$$

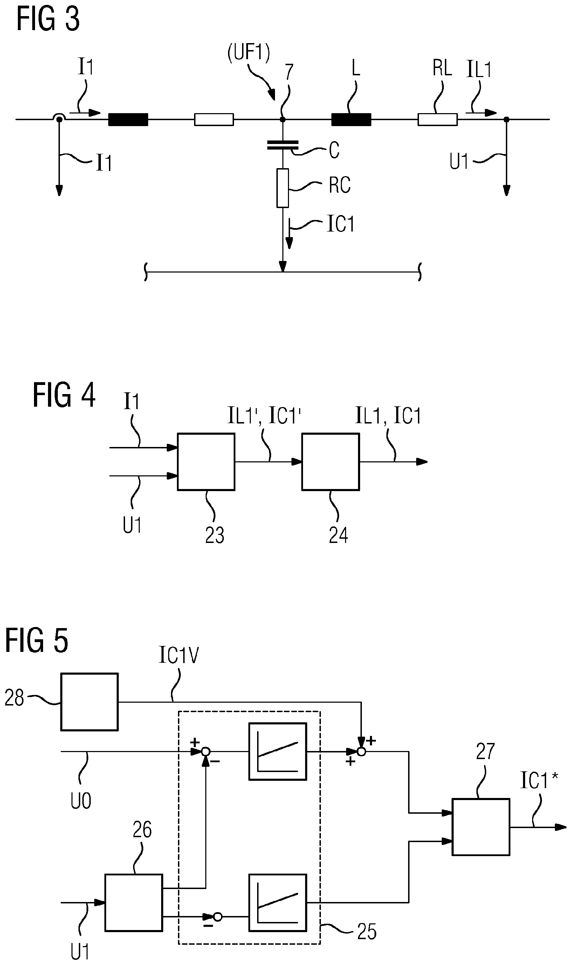

Alternativ ist es möglich, dass die Phasenspannung U1 hinter der Filtereinrichtung 6 gemessen wird, insbesondere hinter der hinteren Induktivität 11. In diesem Fall ermittelt die Stromermittlungseinrichtung 20 den Filterstrom IC1 anhand der erfassten Phasenspannung U1 und des Phasenstroms I1 modellgestützt. Dies wird nachfolgend in Verbindung mit FIG 3 näher erläutert.

Die Filtereinrichtung 6 von FIG 1 kann gemäß dem Ersatzschaltbild von FIG 3 modelliert werden. Gemäß FIG 3 weist die hintere Induktivität 11 einen Widerstandswert RL und einen Induktivitätswert L auf. Der Filterkondensator 8 weist einen Widerstandswert RC und einen Kapazitätswert C auf. Der Phasenstrom I1 und die Phasenspannung U1 werden an den in FIG 3 angegebenen Stellen gemessen.

Für die Filterspannung UF1 am Anschlusspunkt 7 von FIG 3 gelten folgende Beziehungen:

$$UF1 = L \cdot I\dot{L}1 + RL \cdot IL1 + U1 \qquad (3)$$

und

$$UF1 = RC \cdot (I1 - IL1) + \frac{1}{C} \cdot \int (I1 - IL1) dt \qquad (4)$$

Durch Gleichsetzen der Gleichungen (3) und (4) und nachfolgendes Differenzieren nach der Zeit erhält man somit folgende Differenzialgleichung für den Laststrom IL1:

$$L \cdot I\ddot{L}1 + RL \cdot I\dot{L}1 + \dot{U}1 - RC \cdot (\dot{I}1 - I\dot{L}1) - \frac{1}{c} \cdot (I1 - IL1) = 0 \qquad (5)$$

In Gleichung (5) sind die Widerstandswerte RL und RC, der Induktivitätswert L und der Kapazitätswert C Konstanten. Der Phasenstrom I1 und die Phasenspannung U1 werden gemessen und sind daher bekannt. Somit verbleibt als einzige in Gleichung (5) unbekannte Größe der Laststrom IL1. Mit einer geeigneten Initialisierung kann die Differenzialgleichung (5) daher gelöst werden. Mit dem Phasenstrom I1 und dem nunmehr bekannten Laststrom IL1 kann die Stromermittlungseinrichtung 20 somit den Filterstrom IC1 sofort und unmittelbar anhand der Beziehung

$$IL1 = I1 - IC1 \qquad (6)$$

ermitteln.

Im Rahmen der Vorgehensweise von FIG 2 wird somit durch die Umschalteinrichtung 15b erreicht, dass bei Erreichen des Maximalwertes MAX der Umrichter 2 nicht abgeschaltet werden muss, sondern lediglich der Phasenstrom I1 auf zulässige Werte begrenzt wird. Insbesondere greift die Umschalteinrichtung 15b somit derart in die Ansteuerung der Phaseneinheiten 3 eingreift, dass die Beträge der in die Phasenleitungen 5 eingespeisten Phasenströme I1, I2, I3 beim Maximalwert MAX liegen, bis der durch das Ansteuern der Phaseneinheiten 3 bewirkte Spannungsverlauf U1 hinter der Filtereinrichtung 6 wieder die vorbestimmte Amplitude U0 aufweist.

Die Stromregelung kann eine Zweipunktregelung sein. Zweipunktregelung bedeutet in diesem Zusammenhang, dass von den beiden Phasenleitungen 5 stets eine mit dem hohen Potenzial U+ verbunden ist, die andere mit dem niedrigen Potenzial U-. Alternativ ist eine Dreipunktregelung möglich. Dreipunktregelung bedeutet in diesem Zusammenhang, dass - zusätzlich zu den beiden Schaltzuständen gemäß der soeben erläuterten Zweipunktregelung - auch beide Phasenleitungen 5 mit dem selben Potenzial U+, U- verbunden sein können.

Nunmehr werden weitere Ausgestaltungen der Steuereinrichtung 12 erläutert.

Der Phasenstrom I1 und die weitere Messgröße - also entweder der Filterstrom IC1 oder die Phasenspannung U1 - werden zu bestimmten Zeitpunkten erfasst. Die Zeitpunkte können zusammenfallen. Zwingend ist dies jedoch nicht der Fall. Wenn die Zeitpunkte auseinanderfallen, muss zum einen die später erfasste Messgröße auf den Zeitpunkt der früher erfassten Messgröße zurückgerechnet werden. Zum anderen ergibt sich durch die Ermittlung des Laststroms IL1 eine Verzögerung. Zur Kompensation dieser Verzögerung weist die Stromermittlungseinrichtung 20 daher entsprechend der Darstellung in FIG 4 vorzugsweise eine Recheneinrichtung 23 und eine Extrapolationseinrichtung 24 auf. Die Recheneinrichtung 23 ermittelt einen

Filterstrom IC1' für einen Zeitpunkt, zu dem die Messgrößen, anhand derer der Filterstrom IC1' ermittelt wird, erfasst werden. Die Messgrößen sind im Ausnahmefall der zugehörige Phasenstrom I1 und der zugehörige Filterstrom IC1 und im Regelfall der zugehörige Phasenstrom I1 und die zugehörige Phasenspannung U1. Die Recheneinrichtung 23 führt den von ihr ermittelten Filterstrom IC1' der Extrapolationseinrichtung 24 zu. Die Extrapolationseinrichtung 24 modifiziert den ihr zugeführten Filterstrom IC1'. Die Modifikation ist derart, dass der der Extrapolationseinrichtung 24 zugeführte Filterstrom IC1' in Bezug auf eine Nennfrequenz der Phasenspannung U1 (in der Regel 50 Hz oder 60 Hz) um eine Extrapolationszeit extrapoliert ist. Der Umschalteinrichtung 15b wird dann der entsprechend extrapolierte Filterstrom IC1' zugeführt.

Der Extrapolation mit Bezug auf die Nennfrequenz liegt die Überlegung zugrunde, dass der Filterstrom IC1 und der Laststrom IL1 in der Regel mehr oder minder sinusförmig mit der Nennfrequenz oszillieren. Da weiterhin aus der Vergangenheit der bisherige zeitliche Verlauf des Filterstroms IC1' bekannt ist, kann eine gewünschte Extrapolationszeit mit der Periode der Phasenspannung U1 in Bezug gesetzt werden und der Filterstrom IC1 um die Extrapolationszeit extrapoliert werden. Der entsprechend extrapolierte Wert entspricht dann dem Filterstrom IC1, den die Extrapolationseinrichtung 24 der Umschalteinrichtung 15b zuführt.

Prinzipiell ist es auch möglich, die zeitlich umgekehrte Reihenfolge vorzunehmen, also zuerst die Messwerte U1, I1 entsprechend zu modifizieren und sodann anhand der modifizierten Messwerte den Filterstrom IC1 zu ermitteln.

In manchen Fällen ist es möglich, den Soll-Filterstrom IC1* mittels des Sollwertgebers 25 modellgestützt zu ermitteln und der Umschalteinrichtung 15b vorzugeben. In anderen Fällen muss die Ermittlung des Soll-Filterstroms IC1* stabilisiert werden. Beispielsweise können Fehler in der Ermittlung des Laststroms IL1, beispielsweise aufgrund von Bauteiltoleranzen, von Messfehlern oder der Rechengenauigkeit bei der Ermittlung des Laststroms IL1, dazu führen, dass ein anfänglicher Fehler im Laufe der Zeit immer größer wird.

Um einen stabilen Betrieb des Umrichters 2 auch in diesem Fall zu gewährleisten, kann entsprechend der Darstellung in FIG 5 der Sollwertgeber 25 als Spannungsregler ausgebildet sein. Dem Sollwertgeber 25 wird als Istwert die gemessene Phasenspannung U1 zugeführt. Als Sollwert wird dem Sollwertgeber 25 die zugehörige Soll-Phasenspannung U1* zugeführt. Der Sollwertgeber 25 ermittelt sodann anhand der gemessenen Phasenspannung U1 und der Soll-Phasenspannung U1* den Soll-Filterstrom IC1*.

Die Phasenspannung U1 wird erfasst. Die Soll-Phasenspannung U1* kann ohne weiteres als zeitliche Funktion bereitgestellt werden. Insbesondere sind der Nennwert (= Soll-Amplitude U0) und die Frequenz der Soll-Phasenspannung U1* bekannt, so dass zu jedem Zeitpunkt der momentane Sollwert U1* der Phasenspannung U1 ermittelt werden kann. Vorzugsweise aber erfolgt entsprechend der Darstellung in FIG 5 in einem Umrechnungsblock 26 eine Umrechnung der erfassten Phasenspannung U1 in ein mitrotierendes System. Derartige Systeme sind bei Drehstromanwendungen beispielsweise als dq-Systeme bekannt. Auch die Umrechnung ist Fachleuten allgemein bekannt. In diesem Fall umfasst der Sollwertgeber 25 (als Sollwertgeber für den Soll-Filterstrom IC1*) zwei getrennte Regler, denen als Spannungs-Sollwerte konstante Größen zugeführt werden, beispielsweise die Soll-Amplitude U0 und der Wert 0. In diesem Fall werden weiterhin die Ausgangssignale der beiden getrennten Regler in einem weiteren Umrechnungsblock 27 wieder vereinigt und in das nicht mitrotierende Ausgangssystem umgerechnet. Der Sollwertgeber 25 ist im Falle der Ausgestaltung gemäß FIG 5 ein Regler, der einen Integralanteil aufweist bzw. ein integrierendes Verhalten zeigt. Beispielsweise kann der Sollwertgeber 25 als PI-Regler ausgebildet sein.

In dem FIG 5 zugrundeliegenden Fall, bei dem der Umrichter 2 ein zweiphasiges Spannungssystem betreibt, kann ein einziger Sollwertgeber 25 für beide Phasen ausreichend sein, da die Phasenspannung U zwischen den beiden Phasen gemessen werden kann.

Die Dynamik des Sollwertgebers 25 ist in der Regel relativ gering. Meist benötigt der Sollwertgeber 25 zwei bis vier Perioden der Soll-Phasenspannung U1* - insbesondere ca. drei Perioden -, um eine auftretende Störung auszuregeln. Zur Verbesserung der Dynamik im Führungsverhalten weist die Steuereinrichtung 12 daher entsprechend der Darstellung in FIG 5 vorzugsweise eine Vorsteuereinrichtung 28 auf. Der Vorsteuereinrichtung 28 wird die Soll-Phasenspannung U1* (bzw. die Soll-Amplitude U0) zugeführt. Die Vorsteuereinrichtung 28 ermittelt anhand der Soll-Phasenspannung U1* einen Vorsteuerwert IC1V für den Soll-Filterstrom IC1*. Der Vorsteuerwert IC1V wird auf den von dem Sollwertgeber 25 ermittelten Soll-Filterstrom IC1* aufgeschaltet. Der resultierende Soll-Filterstrom ergibt sich in diesem Fall also als Summe des von dem Spannungsregler 25 ermittelten Soll-Filterstroms IC1* und des von der Vorsteuereinrichtung 28 ermittelten Vorsteuerwerts IC1V.

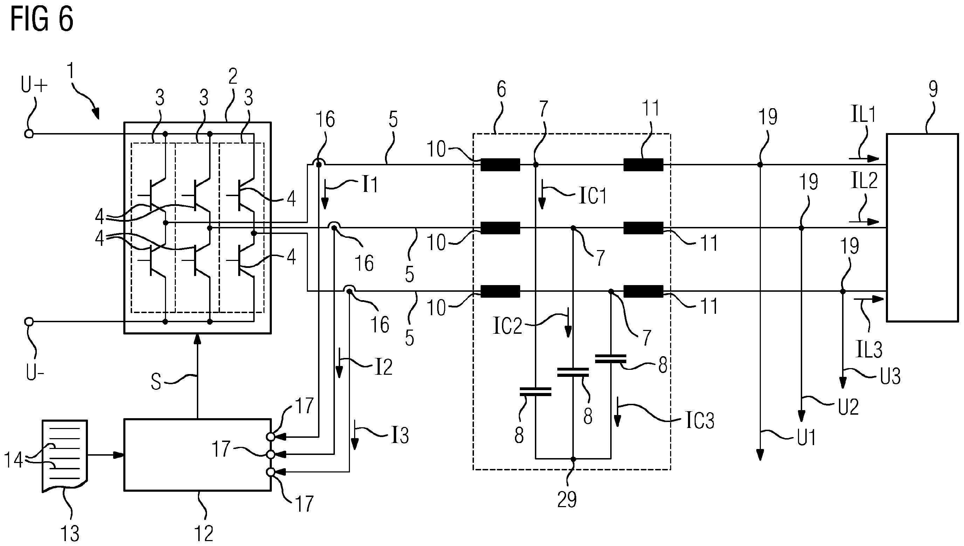

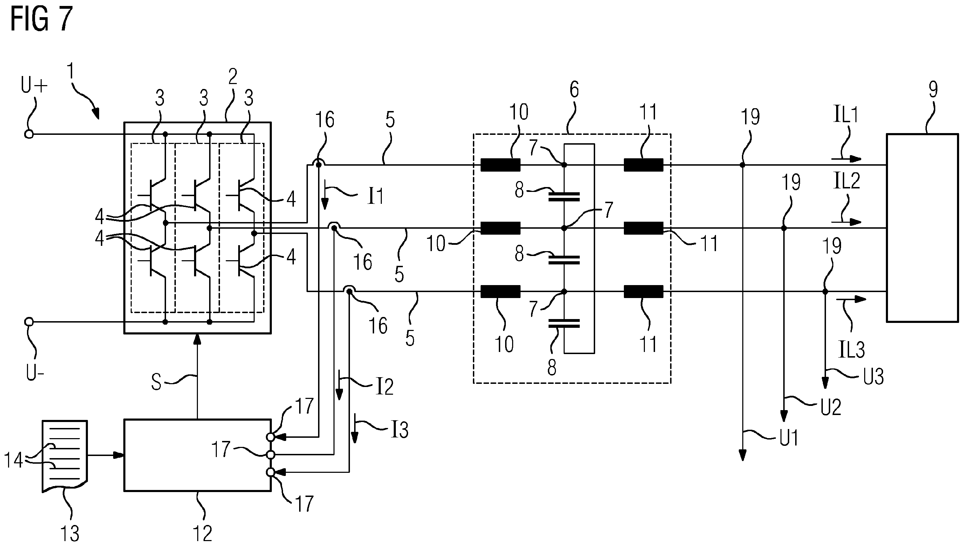

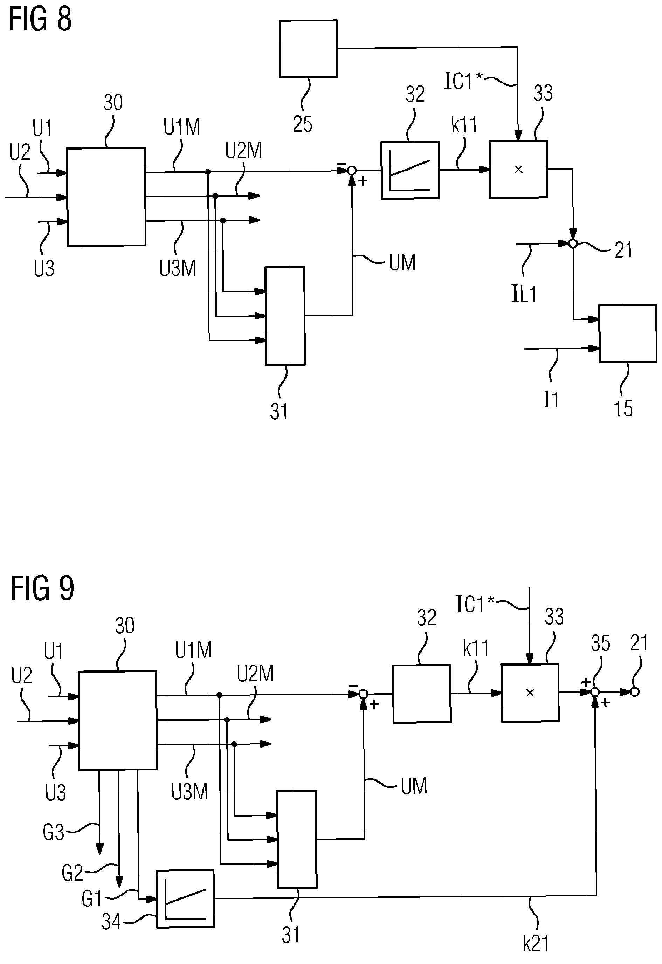

Obenstehend wurde in Verbindung mit den FIG 1 bis 5 ein zweiphasiges Wechselspannungssystem erläutert. In diesem Fall sind - zumindest in der Regel - die beiden Phasen über den Filterkondensator 8 miteinander verbunden, wird die Phasenspannung U1 gegenüber der anderen Phase gemessen und sind die Phasenströme I1, I2, die Filterströme IC1, IC2 und die Lastströme IL1, IL2 jeweils gleich groß und entgegengesetzt gerichtet. Ein zweiphasiges Wechselspannungssystem stellt in der Praxis jedoch die Ausnahme dar. Der Regelfall ist, dass der Umrichter 2 entsprechend der Darstellung in FIG 6 und 7 ein Drehstromsystem betreibt, in dem die Anzahl an Phasen mindestens drei beträgt. In diesem Fall können die Filterkondensatoren 8 entsprechend der Darstellung in FIG 6 nach Art einer Sternschaltung mit einem gemeinsamen Sternpunkt 29 verbunden sein. Der Sternpunkt 29 kann auf die eingangsseitig des Umrichters 2 anstehenden Potenziale U+, U- bezogen sein. Alternativ kann er bezüglich der Potenziale U+, U- schwebend und variabel sein. Alternativ können die Filterkondensatoren 8 entsprechend der Darstellung in FIG 7 nach Art einer Dreieckschaltung jeweils zwei der Phasen miteinander verbinden. Die übrigen Ausführungen zu den FIG 1 bis 5 sind auch für die Ausgestaltungen gemäß den FIG 6 und 7 gültig. Es ist lediglich zu beachten, dass die entsprechenden Ausgestaltungen und Maßnahmen jeweils für die Phasen koordiniert realisiert und ergriffen werden müssen. Soweit Umrechnungen von einer Dreieckschaltung in eine Sternschaltung und umgekehrt vorgenommen werden müssen, sind diese Umrechnungen Fachleuten allgemein bekannt. Sie werden daher nachstehend nicht weiter erläutert. Auch bei den Ausgestaltungen gemäß den FIG 6 und 7 sind Freilaufdioden vorhanden, die in den FIG 6 und 7 nicht dargestellt sind. Wenn die Anzahl an Phasen mindestens drei beträgt (in der Regel exakt drei beträgt), sind jedoch weitere Ausgestaltungen der Steuereinrichtung 12 möglich und sinnvoll. Die Ausgestaltungen sind in den FIG 8, 9 und 10 jeweils für eine einzelne Phase dargestellt. Sie sind jedoch für alle Phasen zu ergreifen und werden daher auch für alle Phasen erläutert.

Gemäß FIG 8 kann die Steuereinrichtung 12 in diesem Fall eine Spannungsermittlungseinrichtung 30 aufweisen. Die Spannungsermittlungseinrichtung 30 nimmt für die Phasen die erfassten Phasenspannungen U1, U2, U3 entgegen. Sie ermittelt - getrennt für jede Phase - jeweils eine auf den Sternpunkt 29 bezogene Amplitude U1M, U2M, U3M. Insbesondere kann die Spannungsermittlungseinrichtung 30 die Phasenspannungen U1, U2, U3 über eine ganze Anzahl von Perioden hinreichend oft erfassen und die erfassten Spannungswerte auswerten. Die Bezugnahme auf den Sternpunkt 29 ist Fachleuten bekannt. Zur Ermittlung der jeweiligen Amplitude U1M, U2M, U3M kann die Spannungsermittlungseinrichtung 30 - getrennt für jede Phase - beispielsweise die erfassten Spannungswerte mit einem Sinus der Nennfrequenz approximieren oder anhand der erfassten Spannungswerte einen RMS-Wert (RMS = root mean square) ermitteln.

Die ermittelten Amplituden U1M, U2M, U3M führt die Spannungsermittlungseinrichtung 30 einem Mittelwertbildner 31 zu. Der Mittelwertbildner 31 bildet den Mittelwert UM der ermittelten Amplituden U1M, U2M, U3M.

Die Steuereinrichtung 12 weist weiterhin für die Phasen jeweils einen Amplitudenregler 32 auf. Dem Amplitudenregler 32 werden als Istwert die jeweilige Amplitude U1M, U2M, U3M und als Sollwert der Mittelwert UM der Amplituden U1M, U2M, U3M zugeführt. Der Mittelwert UM stellt also den gemeinsamen Sollwert für die Amplitudenregler 32 dar. Die Amplitudenregler 32 ermitteln entsprechend der Darstellung in FIG 8 anhand ihres jeweiligen Istwerts - beispielsweise der Amplitude U1M - und des Sollwertes UM einen jeweiligen ersten Korrekturwert k11, k12, k13 für den jeweiligen Soll-Filterstrom IC1*, IC2*, IC3*. Der jeweiligen erste Korrekturwert k11, k12, k13 und der jeweilige Soll-Filterstrom IC1*, IC2*, IC3* werden einem jeweiligen ersten Korrekturblock 33 zugeführt, der den jeweiligen Soll-Filterstrom IC1*, IC2*, IC3* um den jeweiligen ersten Korrekturwert k11, k12, k13 korrigiert. Die Korrektur kann insbesondere durch Multiplizieren des jeweiligen Soll-Filterstroms IC1*, IC2*, IC3* mit dem jeweiligen ersten Korrekturwert k11, k12, k13 realisiert werden.

Die Amplitudenregler 32 sind - analog zu den Spannungsreglern 25 - Regler, die einen Integralanteil aufweisen bzw. ein integrierendes Verhalten zeigen. Beispielsweise können die Amplitudenregler 32 als (reine) Integralregler ausgebildet sein.

Vorzugsweise ermittelt die Spannungsermittlungseinrichtung 30 nicht nur die Amplituden U1M, U2M, U3M der Phasenspannungen U1, U2, U3, sondern führt auch weitere Ermittlungen durch. Insbesondere kann die Spannungsermittlungseinrichtung 30 entsprechend der Darstellung in FIG 9 zusätzlich für die Phasenspannungen U1, U2, U3 auch jeweils einen jeweiligen Gleichspannungsanteil G1, G2, G3 ermitteln. Die Gleichspannungsanteile G1, G2, G3 sind auf den Sternpunkt 29 bezogen. Insbesondere kann die Spannungsermittlungseinrichtung 30 die Phasenspannungen U1, U2, U3 über eine ganze Anzahl von Perioden hinreichend oft erfassen und die erfassten Spannungswerte auswerten. Die Bezugnahme auf den Sternpunkt 29 ist Fachleuten bekannt. Zur Ermittlung des jeweiligen Gleichspannungsanteils G1, G2, G3 kann die Spannungsermittlungseinrichtung 30 während eines jeweiligen Erfassungszeitraums T1, T2, T3 wiederholt die jeweilige Phasenspannung U1, U2, U3 erfassen und - getrennt für jede Phase - den jeweiligen Mittelwert der erfassten Phasenspannungen U1, U2, U3 bilden.

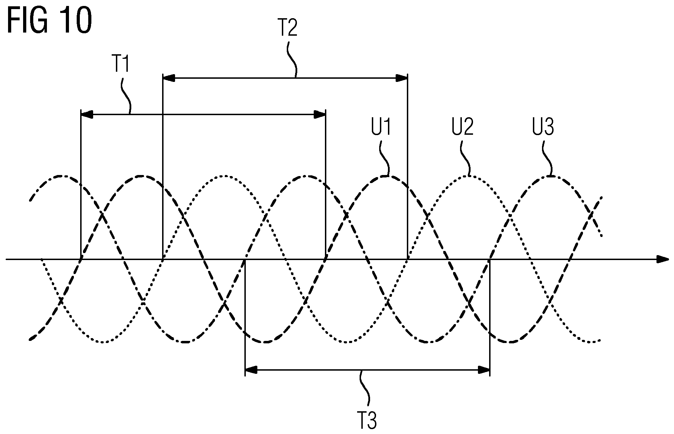

Die Erfassungszeiträume T1, T2, T3 bilden jeweils eine ganze Anzahl von Perioden für die jeweilige Phasenspannung U1, U2, U3. Prinzipiell können die Erfassungszeiträume T1, T2, T3 für die Phasenspannungen U1, U2, U3 beliebig gewählt werden. Insbesondere können sie einheitlich bestimmt werden. Vorzugsweise bestimmt die Steuereinrichtung 12 die Erfassungszeiträume T1, T2, T3 entsprechend der Darstellung in FIG 10 jedoch individuell und unabhängig voneinander. Insbesondere kann die Steuereinrichtung 12 den jeweiligen Erfassungszeitraum T1, T2, T3 derart bestimmen, dass die jeweils erste Erfassung einer jeweiligen Phasenspannung U1, U2, U3 unmittelbar nach dem Nulldurchgang der jeweiligen Phasenspannung U1, U2, U3 erfolgt. Der Nulldurchgang ist in der Regel auf das reale oder virtuelle Potenzial des Sternpunkts 29 bezogen.

Im Falle der Ermittlung der Gleichspannungsanteile G1, G2, G3 weist die Steuereinrichtung 12 gemäß FIG 9 für die Phasen weiterhin jeweils einen Offsetregler 34 auf. Der jeweilige Offsetregler 34 nimmt den jeweiligen Gleichspannungsanteil G1, G2, G3 entgegen. Er ermittelt anhand des jeweiligen Gleichspannungsanteils G1, G2, G3 einen jeweiligen zweiten Korrekturwert k21, k22, k23 für den jeweiligen Soll-Filterstrom IC1*, IC2*, IC3*. Der jeweilige zweite Korrekturwert k21, k22, k23 und der jeweilige - bereits um den ersten Korrekturwert k11, k12, k13 korrigierte - jeweilige Soll-Filterstrom IC1*, IC2*, IC3* werden einem jeweiligen zweiten Korrekturblock 35 zugeführt, der den jeweiligen Soll-Filterstrom IC1*, IC2*, IC3* um den jeweiligen zweiten Korrekturwert k21, k22, k23 korrigiert. Die Korrektur kann insbesondere durch Addieren des jeweiligen Soll-Filterstroms IC1*, IC2*, IC3* und des jeweiligen zweiten Korrekturwertes k21, k22, k23 realisiert werden.

Die Offsetregler 34 sind - analog zu den Spannungsreglern 25 und den Amplitudenreglern 32 - Regler, die einen Integralanteil aufweisen bzw. ein integrierendes Verhalten zeigen. Beispielsweise können die Offsetregler 34 als (reine) Integralregler ausgebildet sein.

Die Dynamik der Offsetregler 34, der Amplitudenregler 32 und der Sollwertgeber 25 sollte aufeinander abgestimmt sein. Insbesondere sollten die Sollwertgeber 25 die größte Dynamik aufweisen. Die Dynamik der Offsetregler 34 und der Amplitudenregler 32 sollte also geringer sein als die der Sollwertgeber 25. Vorzugsweise weisen jedoch die Offsetregler 34 eine Dynamik auf, die größer als die Dynamik der Amplitudenregler 32 ist. Insbesondere sollten die Offsetregler 34 drei- bis fünfmal so schnell auf eine Störung reagieren wie die Amplitudenregler 32. Im Vergleich zu den Sollwertgebern 25 sollte ihre Dynamik jedoch bei etwa 1/3 bis 2/3 liegen.

Die vorliegende Erfindung weist viele Vorteile auf. Aufgrund der direkten Stromregelung, die sowohl im Normalbetrieb als auch im Kurzschlussbetrieb wirkt, ist im Kurzschlussfall kein Umschalten von einer Spannungsregelung auf eine Stromregelung erforderlich. Dadurch können transiente Störungen, die anderenfalls auftreten würden, vermieden werden. Dennoch können insbesondere Kurzschlussströme dynamisch bereitgestellt und begrenzt werden. Es ist ein einfacher Übergang von einem Inselnetzbetrieb auf einen Netzparallelbetrieb und umgekehrt möglich. Auch an der Stromgrenze des Umrichters 2 ist ein stabiler Betrieb möglich. Weiterhin kann die erfindungsgemäße Steuereinrichtung 12 auch in Verbindung mit einer Last 9 eingesetzt werden, die dynamisch - beispielsweise beim Zuschalten - zwar für eine gewisse Zeit einen erhöhten Strombedarf hat, danach aber wieder weniger Strom benötigt. Ein Beispiel einer derartigen Last 9 ist eine größere Asynchronmaschine. Es kann im Normalbetrieb eine hohe Güte bei der Bereitstellung der Phasenspannungen U1, U2, U3 erreicht werden. Dies gilt unabhängig davon, ob die Last 9 linear oder nichtlinear ist und/oder ob die Last 9 symmetrisch oder unsymmetrisch ist. Weiterhin ist die erfindungsgemäße Vorgehensweise nicht auf ein bestimmtes Koordinatensystem beschränkt. Es kann nach Bedarf direkt mit den Phasenströmen I1, I2, I3 bzw. Filterströmen IC1, IC2, IC3 bzw. Lastströmen IL1, IL2, IL3 oder mit zwei zueinander orthogonalen Strömen und einem Nullstrom oder Summenstrom in einem ruhenden Koordinatensystem (meist als ab0-System bezeichnet) oder mit zwei zueinander orthogonalen Strömen und einem Nullstrom oder Summenstrom in einem mitrotierenden Koordinatensystem (meist als dq0-System bezeichnet) ausgeführt werden.

## Patentansprüche

1. Steuereinrichtung für einen Umrichter (2), wobei der Umrichter (2) dazu eingerichtet ist, für eine Anzahl an Phasen alternierend jeweils ein eingangsseitig des Umrichters (2) bereitgestelltes hohes Potenzial (U+) und ein eingangsseitig des Umrichters (2) bereitgestelltes niedriges Potenzial (U-) über eine jeweilige Phaseneinheit (3) des Umrichters (2) an je eine Phasenleitung (5) anzuschalten und dadurch in die Phasenleitungen (5) Phasenströme (I1, I2, I3) einzuspeisen, wobei die Phasenströme (I1, I2, I3) über eine dem Umrichter (2) nachgeordnete Filtereinrichtung (6) geführt werden, wobei die Filtereinrichtung (6) dazu eingerichtet ist, über eine Anzahl von an Anschlusspunkten (7) der Phasenleitungen (5) zwischen den Phasenleitungen (5) untereinander angeordnete Filterkondensatoren (8) oder über eine Anzahl von an den Anschlusspunkten (7) an je eine der Phasenleitungen (5) angeschlossene Filterkondensatoren (8) an den Phasenleitungen (5) Filterströme (IC1, IC2, IC3) abzugreifen und die verbleibenden Teile der Phasenströme (I1, I2, I3) einer elektrischen Last (9) als Lastströme (I11, IL2, IL3) zuzuführen,

- wobei die Steuereinrichtung eine Regeleinrichtung (15) aufweist, dazu eingerichtet, die Ansteuersignale (S) für die Phaseneinheiten (3) des Umrichters (2) zu ermitteln und die Phaseneinheiten (3) des Umrichters (2) entsprechend anzusteuern,
- wobei die Steuereinrichtung dazu eingerichtet ist, die in die Phasenleitungen (5) einspeisten Phasenströme (I1, I2, I3) entgegenzunehmen,
- wobei die Regeleinrichtung (15) dazu eingerichtet ist, die Ansteuersignale (S) für die Phaseneinheiten (3) des Umrichters (2) mittels einer direkten Stromregelung zu ermitteln, der als Istwerte ausgangsseitig des Umrichters (2) fließende Ströme (I1, I2, I3, IC1, IC2, IC3) und als Sollwerte die zugehörigen Sollströme (I1*, I2*, 13*, IC1*, IC2*, IC3*) zugeführt werden,
- wobei die Regeleinrichtung (15) dazu eingerichtet ist, die Ansteuersignale (S) derart zu ermitteln, dass ein durch das Ansteuern der Phaseneinheiten (3) bewirkter Spannungsverlauf hinter der Filtereinrichtung (6) eine vorbestimmte Amplitude (U0) aufweist, wenn und solange die Beträge der in die Phasenleitungen (5) einspeisten Phasenströme (I1, I2, I3) einen Mindestabstand von einem vorbestimmten Maximalwert (MAX) aufweisen,
- wobei die Steuereinrichtung dazu eingerichtet ist, durch eine weitere Einrichtung (15b) derart in die Ansteuerung der Phaseneinheiten (3) einzugreifen, dass die Beträge der in die Phasenleitungen (5) einspeisten Phasenströme (I1, I2, I3) auf den Maximalwert (MAX) begrenzt werden, bis der durch das Ansteuern der Phaseneinheiten (3) bewirkte Spannungsverlauf hinter der Filtereinrichtung (6) wieder die vorbestimmte Amplitude (U0) aufweist,
- wobei die weitere Einrichtung (15b) als Umschalteinrichtung (15b) ausgebildet ist,
- wobei die Umschalteinrichtung (15b) der Regeleinrichtung (15) dazu eingerichtet ist, in einem Normalbetrieb als Istwerte die Filterströme (IC1, IC2, IC3) und als Sollwerte von einem Sollwertgeber (25) ermittelte Soll-Filterströme (IC1*, IC2*, IC3*) zuzuführen, wenn und solange die Beträge der in die Phasenleitungen (5) einspeisten Phasenströme (I1, I2, I3) den Mindestabstand von dem vorbestimmten Maximalwert (MAX) aufweisen,
- wobei die Umschalteinrichtung (15b) dazu eingerichtet ist, vom Normalbetrieb in einen Kurzschlussbetrieb zu übergehen, in dem die Umschalteinrichtung (15b) der Regeleinrichtung (15) dazu eingerichtet ist, als Istwerte die Phasenströme (I1, I2, I3) und als Sollwert den Maximalwert (MAX) oder das Inverse des Maximalwerts (MAX) zuzuführen, wenn und sobald die Beträge der Phasenströme (I1, I2, I3) den Mindestabstand vom Maximalwert (MAX) unterschreiten, und wobei die Umschalteinrichtung (15b) dazu eingerichtet ist, vom Kurzschlussbetrieb wieder in den Normalbetrieb überzugehen, wenn und sobald der durch das Ansteuern der Phaseneinheiten (3) bewirkte Spannungsverlauf hinter der Filtereinrichtung (6) wieder die vorbestimmte Amplitude (U0) aufweist.

2. Steuereinrichtung nach Anspruch 1, wobei die Steuereinrichtung dazu eingerichtet ist, die Filterströme (IC1, IC2, IC3) als Messgrößen entgegenzunehmen.

3. Steuereinrichtung nach Anspruch 1, wobei die Steuereinrichtung dazu eingerichtet ist, die Filterströme (IC1, IC2, IC3) anhand ausgangsseitig des Umrichters (2) erfasster und von der Steuereinrichtung entgegengenommener Messgrößen (I1, I2, I3, U1, U2, U3) zu ermitteln.

4. Steuereinrichtung nach Anspruch 3,

- wobei die Steuereinrichtung eine Recheneinrichtung (23) und eine Extrapolationseinrichtung (24) aufweist,
- wobei die Recheneinrichtung (23) dazu eingerichtet ist, die Filterströme (IC1, IC2, IC3) für einen Zeitpunkt zu ermitteln, zu dem die Messgrößen (I1, I2, I3, IC1, IC2, IC3, U1, U2, U3), anhand derer die Filterströme (IC1, IC2, IC3) ermittelt werden, erfasst werden,
- wobei die Recheneinrichtung (23) dazu eingerichtet ist, die von ihr ermittelten Filterströme (IC1') der Extrapolationseinrichtung (24) zuzuführen,
- wobei die Extrapolationseinrichtung (24) dazu eingerichtet ist, die ihr zugeführten Filterströme (IC1') derart zu modifizieren, dass sie in Bezug auf eine Nennfrequenz der Phasenspannungen (U1, U2, U3) um eine Extrapolationszeit extrapoliert sind, und
- wobei die Extrapolationseinrichtung (24) dazu eingerichtet ist, die von ihr modifizierten Filterströme (IC1') der Umschalteinrichtung (15b) zuzuführen.

5. Steuereinrichtung nach Anspruch 3,

- wobei die Steuereinrichtung eine Recheneinrichtung (23) und eine Extrapolationseinrichtung (24) aufweist,
- wobei die Extrapolationseinrichtung (24) dazu eingerichtet ist, die Messgrößen (I1, I2, I3, IC1, IC2, IC3, U1, U2, U3), anhand derer die Filterströme (IC1, IC2, IC3) ermittelt werden, derart zu modifizieren, dass sie gegenüber einem Zeitpunkt, zu dem die Messgrößen (I1, I2, I3, IC1, IC2, IC3, U1, U2, U3) erfasst werden, in Bezug auf eine Nennfrequenz der Phasenspannungen (U1, U2, U3) um eine Extrapolationszeit extrapoliert sind,
- wobei die Extrapolationseinrichtung (24) dazu eingerichtet ist, die von ihr modifizierten Messgrößen (I1, I2, I3, IC1, IC2, IC3, U1, U2, U3) der Recheneinrichtung (23) zuzuführen und
- wobei die Recheneinrichtung (23) dazu eingerichtet ist, anhand der ihr zugeführten modifizierten Messgrößen (I1, I2, I3, IC1, IC2, IC3, U1, U2, U3) die Filterströme (IC1, IC2, IC3) zu ermitteln und die Filterströme (IC1, IC2, IC3) der Umschalteinrichtung (15b) zuzuführen.

6. Steuereinrichtung nach Anspruch 3, wobei die Steuereinrichtung dazu eingerichtet ist, innerhalb oder hinter der Filtereinrichtung (6) erfasste Phasenspannungen (U1, U2, U3) der Phasenleitungen (5) entgegenzunehmen wobei der Sollwertgeber (25) als Spannungsregler ausgebildet ist, dem die erfassten Phasenspannungen (U1, U2, U3) und Soll-Phasenspannungen (U1*, U2*, U3*) zugeführt werden und der dazu eingerichtet ist, anhand der erfassten Phasenspannungen (U1, U2, U3) und der Soll-Phasenspannung (U1*, U2*, U3*) die Soll-Filterströme (IC1*, IC2*, IC3*) zu ermitteln.

7. Steuereinrichtung nach Anspruch 6,

- wobei die Steuereinrichtung Vorsteuereinrichtungen (28) aufweist, denen die Soll-Phasenspannungen (U1*, U2*, U3*) zugeführt werden und die dazu eingerichtet ist, anhand der Soll-Phasenspannungen (U1*, U2*, U3*) Vorsteuerwerte (IC1V) für die von den Sollwertgebern (25) ermittelten Soll-Filterströme zu ermitteln, und
- wobei die Vorsteuerwerte (IC1V) auf die von den Sollwertgebern (25) ermittelten Soll-Filterströme aufgeschaltet werden.

8. Steuereinrichtung nach Anspruch 7,

- wobei die Anzahl an Phasen mindestens drei beträgt,
- wobei die Steuereinrichtung eine Spannungsermittlungseinrichtung (30) aufweist, die dazu eingerichtet ist, die innerhalb oder hinter der Filtereinrichtung (6) erfassten Phasenspannungen (U1, U2, U3) der Phasenleitungen (5) entgegenzunehmen und für die Phasenspannungen (U1, U2, U3) jeweils eine auf einen Sternpunkt (29) bezogene Amplitude (U1M, U2M, U3M) zu ermitteln, und
- wobei die Steuereinrichtung für die Phasen jeweils einen Amplitudenregler (32) aufweist, dem als Istwert die jeweilige Amplitude (U1M, U2M, U3M) und als Sollwert der Mittelwert (UM) der Amplituden (U1M, U2M, U3M) zugeführt werden und der dazu eingerichtet ist, anhand seines jeweiligen Istwerts (U1M, U2M, U3M) und seines jeweiligen Sollwerts (UM) einen jeweiligen ersten Korrekturwert (k11, k12, k13) für den jeweiligen Soll-Filterstrom zu ermitteln und den jeweiligen Soll-Filterstrom (IC1*, IC2*, IC3*) um den jeweiligen ersten Korrekturwert (k11, k12, k13) zu korrigieren.

9. Steuereinrichtung nach Anspruch 8,

- wobei die Spannungsermittlungseinrichtung (30) dazu eingerichtet ist, für die Phasenspannungen (U1, U2, U3) jeweils einen auf den Sternpunkt (29) bezogenen jeweiligen Gleichspannungsanteil (G1, G2, G3) zu ermitteln,
- wobei die Steuereinrichtung für die Phasen jeweils einen Offsetregler (34) aufweist, dazu eingerichtet, den jeweiligen Gleichspannungsanteil (G1, G2, G3) entgegenzunehmen und anhand des jeweiligen Gleichspannungsanteils (G1, G2, G3) einen jeweiligen zweiten Korrekturwert (k21, k22, k23) für den jeweiligen Soll-Filterstrom (IC1*, IC2*, IC3*) zu ermitteln und den jeweiligen Soll-Filterstrom (IC1*, IC2*, IC3*) um den ermittelten jeweiligen zweiten Korrekturwert (k21, k22, k23) zu korrigieren.

10. Steuereinrichtung nach Anspruch 9, wobei die Spannungsermittlungseinrichtung (30) dazu eingerichtet ist, zur Ermittlung der Gleichspannungsanteile (G1, G2, G3) für die Phasenspannungen (U1, U2, U3) während eines jeweiligen Erfassungszeitraums (T1, T2, T3) jeweils eine Mehrzahl von erfassten Phasenspannungen (U1, U2, U3) entgegenzunehmen und den jeweiligen Gleichspannungsanteil (G1, G2, G3) als deren jeweiligen Mittelwert zu ermitteln und wobei die Steuereinrichtung dazu eingerichtet ist, den jeweiligen Erfassungszeitraum (T1, T2, T3) für die Phasen individue11 und unabhängig von den Erfassungszeiträumen (T1, T2, T3) für die anderen Phasen zu bestimmen.

11. Steuereinrichtung nach einem der obigen Ansprüche, wobei die Steuereinrichtung als programmierbare Steuereinrichtung ausgebildet ist, wobei die Steuereinrichtung mit einem Steuerprogramm (13) programmiert ist und wobei das Steuerprogramm (13) Maschinencode (14) umfasst, durch den die Steuereinrichtung als Steuereinrichtung nach einem der Ansprüche 1 bis 9 ausgebildet wird.

12. Steuerprogramm für eine programmierbare Steuereinrichtung (12) für einen Umrichter (2), wobei das Steuerprogramm Maschinencode (14) umfasst, durch den die Steuereinrichtung (12) gemäß einem der Ansprüche 1 bis 10 ausgebildet wird.

13. Umrichtereinheit,

- wobei die Umrichtereinheit einen Umrichter (2) aufweist, dazu eingerichtet, für eine Anzahl an Phasen alternierend jeweils ein eingangsseitig des Umrichters (2) bereitgestelltes hohes Potenzial (U+) und ein eingangsseitig des Umrichters (2) bereitgestelltes niedriges Potenzial (U-) über eine jeweilige Phaseneinheit (3) des Umrichters (2) an je eine Phasenleitung (5) anzuschalten und dadurch in die Phasenleitungen (5) Phasenströme (I1, I2, I3) einzuspeisen,
- wobei die Umrichtereinheit eine dem Umrichter (2) nachgeordnete Filtereinrichtung (6) aufweist, über die die Phasenströme (I1, I2, I3) geführt werden,
- wobei die Filtereinrichtung (6) dazu eingerichtet ist, über eine Anzahl von an Anschlusspunkten (7) der Phasenleitungen (5) zwischen den Phasenleitungen (5) untereinander angeordnete Filterkondensatoren (8) oder über eine Anzahl von an den Anschlusspunkten (7) an je eine der Phasenleitungen (5) angeschlossene Filterkondensatoren (8) an den Phasenleitungen (5) Filterströme (IC1, IC2, IC3) abzugreifen und die verbleibenden Teile der Phasenströme (I1, I2, I3) einer elektrischen Last (9) als Lastströme (IL1, IL2, IL3) zuzuführen,
- wobei die Umrichtereinheit eine Steuereinrichtung (12) nach einem der Ansprüche 1 bis 11 aufweist, welche dazu eingerichtet ist, den Umrichter (2) anzusteuern.

## Claims

1. Control device for a converter (2), wherein the converter (2) is configured, to switch a high potential (U+) provided at the input side of the converter (2) and a low potential (U-) provided at the input side of the converter (2) alternately for each of a number of phases via a respective phase unit (3) of the converter (2), in each case to a phase line (5), and thereby to feed phase currents (I1, I2, I3) into the phase lines (5), wherein the phase currents (I1, I2, I3) are fed via a filter device (6) arranged downstream of the converter (2), wherein the filter device (6) is configured to tap off filter currents (IC1, IC2, IC3) at the phase lines (5) via a number of filter capacitors (8) arranged one above the other between the phase lines (5) at connection points (7) of the phase lines (5) or via a number of filter capacitors (8) connected at the connection points (7), each to one of the phase lines (5), and to feed the remaining portions of the phase currents (I1, I2, I3) to an electrical load (9) as load currents (I11, IL2, IL3),

- wherein the control device has a regulating device (15) configured to determine activation signals (S) for the phase units (3) of the converter (2) and to activate the phase units of the converter (2) accordingly,
- wherein the control device is configured to receive the phase currents (I1, I2, I3) fed into the phase lines (5),
- wherein the regulating device (15) is configured to determine the activation signals (S) for the phase units (3) of the converter (2) by means of a direct current regulation, to which currents (I1, I2, I3, IC1, IC2, IC3) flowing at the output side of the converter (2) are fed as actual values and, as setpoint values, the associated setpoint currents (I1*, I2*, I3*, IC1*, IC2*, IC3*) are fed,
- wherein the regulating device (15) is configured to determine the activation signals (S) in such a way that a voltage profile downstream of the filter device (6) brought about by the activation of the phase units (3) has a predetermined amplitude (U0) if and for as long as the amounts of the phase currents (I1, I2, I3) fed into the phase lines (5) have a minimum spacing from a predetermined maximum value (MAX),
- wherein, by means of a further device (15b), the control device is configured to engage in the activation of the phase units (3) in such a way that the amounts of the phase currents (I1, I2, I3) fed into the phase lines (5) are limited to the maximum value (MAX) until the voltage profile downstream of the filter device (6) brought about by the activation of the phase units (3) again has the predetermined amplitude (U0),
- wherein the further device (15b) is configured as a changeover device (15b),
- wherein, in a normal operation, the changeover device (15b) is configured to feed the filter currents (IC1, IC2, IC3) as actual values to the regulating device (15) and, as setpoint values, the setpoint filter currents (IC1*, IC2*, IC3*) determined by a setpoint generator (25) if and for as long as the amounts of the phase currents (I1, I2, I3) fed into the phase lines (5) have the minimum spacing from the predetermined maximum value (MAX),

- wherein the changeover device (15b) is configured to change from normal operation into a short-circuit operation in which the changeover device (15b) is configured to feed to the regulating device (15) as actual values the phase currents (I1, 12, 13) and, as the setpoint value, the maximum value (MAX) or the inverse of the maximum value (MAX) if and as soon as the amounts of the phase currents (I1, 12, 13) fall below the minimum spacing from the maximum value (MAX), and
- wherein the changeover device (15b) is configured to change again from short-circuit operation to normal operation if and as soon as the voltage profile downstream of the filter device (6) brought about by the activation of the phase units (3) has the predetermined amplitude (U0) again.

2. Control device according to claim 1,
wherein the control device is configured to receive the filter currents (IC1, IC2, IC3) as measured variables.

3. Control device according to claim 1,
wherein the control device is configured to determine the filter currents (IC1, IC2, IC3) on the basis of measured variables (I1, 12, 13, U1, U2, U3) detected at the output side of the converter (2) and received by the control device.

4. Control device according to claim 3,

- wherein the control device has a computer device (23) and an extrapolation device (24),
- wherein the computer device (23) is configured to determine the filter currents (IC1, IC2, IC3) for a time point at which the measured variables (I1, 12, 13, IC1, IC2, IC3, U1, U2, U3) are detected, on the basis of which the filter currents (IC1, IC2, IC3) are determined,
- wherein the computer device (23) is configured to feed the filter currents (IC1') determined by it to the extrapolation device (24),
- wherein the extrapolation device (24) is configured to modify the filter currents (IC1') fed to it in such a way that they are extrapolated in relation to a nominal frequency of the phase voltages (U1, U2, U3) by an extrapolation time, and
- wherein the extrapolation device (24) is configured to feed the filter currents (IC1') modified by it to the changeover device (15b).

5. Control device according to claim 3,

- wherein the control device has a computer device (23) and an extrapolation device (24),
- wherein the extrapolation device (24) is configured to modify the measured variables (I1, 12, 13, IC1, IC2, IC3, U1, U2, U3) on the basis of which the filter currents (IC1, IC2, IC3) are determined such that they are extrapolated in relation to a time point at which the measured variables (I1, 12, 13, IC1, IC2, IC3, U1, U2, U3) are detected, relative to a nominal frequency of the phase voltages (U1, U2, U3), by an extrapolation time,
- wherein the extrapolation device (24) is configured to feed the measured variables (I1, 12, 13, IC1, IC2, IC3, U1, U2, U3) modified by it to the computer device (23) and
- wherein the computer device (23) is configured to determine the filter currents (IC1, IC2, IC3) on the basis of the modified measured variables (I1, 12, 13, IC1, IC2, IC3, U1, U2, U3) fed to it and to feed the filter currents (IC1, IC2, IC3) to the changeover device (15b).

6. Control device according to claim 3,
wherein the control device is configured to receive the phase voltages (U1, U2, U3) of the phase lines (5) detected within or downstream of the filter device (6) and wherein the setpoint generator (25) is configured as a voltage regulator to which the detected phase voltages (U1, U2, U3) and setpoint phase voltages (U1*, U2*, U3*) are fed and which is configured, on the basis of the phase voltages (U1, U2, U3) detected and the setpoint phase voltages (U1*, U2*, U3*), to determine the setpoint filter currents (IC1*, IC2*, IC3*).

7. Control device according to claim 6,

- wherein the control device has pilot control devices (28) to which the setpoint phase voltages (U1*, U2*, U3*) are fed and which are configured, on the basis of the setpoint phase voltages (U1*, U2*, U3*), to determine pilot control values (IC1V) for the setpoint filter currents determined by the setpoint generators (25), and
- wherein the pilot control values (IC1V) can be applied to the setpoint filter currents determined by the setpoint generators (25).

**8.** Control device according to claim 7,

- wherein the number of phases is at least three,
- wherein the control device has a voltage determining device (30) which is configured to receive the phase voltages (U1, U2, U3) of the phase lines (5) detected within or downstream of the filter device (6) and for each of the phase voltages (U1, U2, U3), to determine an amplitude (U1M, U2M, U3M) in relation to a neutral point (29), and
- wherein the control device has an amplitude regulator (32) for each of the phases to which as the actual value, the respective amplitude (U1M, U2M, U3M) is fed and as the setpoint value, the mean value (UM) of the amplitudes (U1M, U2M, U3M) are fed and which is configured, on the basis of its respective actual value (U1M, U2M, U3M) and its respective setpoint value (UM), to determine a respective first correction value (k11, k12, k13) for each respective setpoint filter current and to correct the respective setpoint filter current (IC1*, IC2*, IC3*) by the respective first correction value (k11, k12, k13).

**9.** Control device according to claim 8,

- wherein the voltage determining device (30) is configured to determine a direct current component (G1, G2, G3) related to the neutral point (29) for each of the phase voltages (U1, U2, U3),
- wherein the control device has an offset regulator (34) for each of the phases, configured to receive the respective direct current component (G1, G2, G3) and, on the basis of the respective direct current component (G1, G2, G3), to determine a respective second correction value (k21, k22, k23) for each setpoint filter current (IC1*, IC2*, IC3*) and to correct the respective setpoint filter current (IC1*, IC2*, IC3*) by the respective determined second correction value (k21, k22, k23).

**10.** Control device according to claim 9, wherein in order to determine the direct current components (G1, G2, G3) for the phase voltages (U1, U2, U3), the voltage determining device (30) is configured to receive a plurality of detected phase voltages (U1, U2, U3) in each case during a respective detection period (T1, T2, T3) and to determine the respective direct current component (G1, G2, G3) as the respective mean value thereof, and wherein the control device is configured to determine the detection period (T1, T2, T3) for the phases individually and independently of the detection periods (T1, T2, T3) for the other phases.

**11.** Control device according to one of the preceding claims, wherein the control device is configured as a programmable control device, wherein the control device is programmed with a control program (13) and wherein the control program (13) comprises machine code (14) by means of which the control device is configured as a control device according to one of claims 1 to 9.

**12.** Control program for a programmable control device (12) for a converter (2), wherein the control program comprises machine code (14) by means of which the control device (12) is configured according to one of claims 1 to 10.

**13.** Converter unit,

- wherein the converter unit has a converter (2) which is configured to switch a high potential (U+) provided at the input side of the converter (2) and a low potential (U-) provided at the input side of the converter (2) alternately for each of a number of phases via a respective phase unit (3) of the converter (2), in each case to a phase line (5), and thereby to feed phase currents (I1, 12, 13) into the phase lines (5),
- wherein the converter unit has a filter device (6) arranged downstream of the converter (2) and via which the phase currents (I1, 12, 13) are fed,
- wherein the filter device (6) is configured to tap off filter currents (IC1, IC2, IC3) at the phase lines (5) via a number of filter capacitors (8) arranged one above the other between the phase lines (5) at connection points (7) of the phase lines (5) or via a number of filter capacitors (8) connected at the connection points (7), each to one of the phase lines (5), and to feed the remaining portions of the phase currents (I1, 12, 13) to an electrical load (9) as load currents (IL1, IL2, IL3),
- wherein the converter unit has a control device (12), according to one of claims 1 to 11, which is configured to control the converter (2).

**Revendications**

1. Dispositif de commande d'un convertisseur (2), le convertisseur étant conçu pour mettre, pour un certain nombre de phases sur respectivement une ligne (5) de phase par une unité (3) respective de phase du convertisseur (2), en alternance respectivement un potentiel (U+) haut disponible du côté de l'entrée du convertisseur (2) et un potentiel (U-) bas disponible du côté de l'entrée du convertisseur (2) et injecter ainsi des courants (I1, I2, I3) de phase dans les lignes (5) de phase,
dans lequel les courants (I1, I2, I3) de phase passent par un dispositif (6) de filtrage en aval du convertisseur (2),
dans lequel le dispositif (6) de filtrage est conçu pour, par un certain nombre de condensateurs (8) de filtrage montés mutuellement entre les lignes (5) de phase en des points (7) de connexion des lignes (5) de phase ou par un certain nombre de condensateurs (8) de filtrage connectés à respectivement l'une des lignes (5) de phase, prélever des courants (IC1, IC2, IC3) de filtrage aux points (7) de connexion et envoyer les parties restantes des courants (I1, I2, I3) de phase à une charge (9) électrique comme courant (IL1, IL2, IL3) de charge,

- dans lequel le dispositif de commande a un dispositif (15) de régulation conçu pour déterminer les signaux (S) de commande des unités (3) de phase du convertisseur et commander d'une manière correspondante les unités (3) de phase du convertisseur (2),
- dans lequel le dispositif de commande est conçu pour recevoir les courants (I1, I2, I3) de phase injectés dans les lignes (5) de phase,
- dans lequel le dispositif (15) de régulation est conçu pour déterminer les signaux (S) de commande des unités (3) de phase du convertisseur (2) au moyen d'une régulation de courant directe, à laquelle sont envoyés, comme valeurs réelles, des courants (I1, I2, I3, IC1, IC2, IC3) passant du côté de la sortie du convertisseur (2) et, comme valeurs de consigne, les courants (I1*, I2*, I3*, IC1*, IC2*, IC3*) de consigne associés,
- dans lequel le dispositif (15) de régulation est conçu pour déterminer les signaux (S) de commande de manière à ce qu'une courbe de tension, provoquée par la commande des unités (3) de phase, ait, derrière le dispositif (6) de filtrage, une amplitude (U0) déterminée à l'avance si et tant que les valeurs absolues des courants (I1, I2, I3) de phase injectés dans les lignes (5) de phase ont une distance minimum à une valeur (MAX) maximum déterminée à l'avance,
- dans lequel le dispositif de commande est conçu pour intervenir par un autre dispositif (15b) dans la commande des unités (3) de phase de manière à limiter les valeurs absolues des courants (I1, I2, I3) de phase injectés dans les lignes (5) de phase à la valeur (MAX) maximum, jusqu'à ce que la courbe de tension, provoquée par la commande des unités (3) de phase, ait, derrière le dispositif (6) de filtrage, à nouveau l'amplitude (U0) déterminée à l'avance,
- dans lequel l'autre dispositif (15b) est constitué sous la forme d'un dispositif (15b) de commutation,
- dans lequel le dispositif (15b) de commutation du dispositif (15) de régulation est conçu pour envoyer dans un fonctionnement normal comme valeurs réelles les courants (IC1, IC2, IC3) de filtrage et comme valeurs de consigne des courants (IC1*, IC2*, IC3*) de filtrage de consigne déterminés par un donneur (25) de valeur de consignes si et tant que les valeurs absolues des courants (I1, I2, I3) de phase injectés dans les lignes (5) de phase ont la distance minimum à la valeur (MAX) maximum déterminée à l'avance,
- dans lequel le dispositif (15b) de commutation est conçu pour passer d'un fonctionnement normal à un fonctionnement en court-circuit, dans lequel le dispositif (15b) de commutation du dispositif (15) de régulation est conçu pour envoyer comme valeurs réelles les courants (I1, I2, I3) de phase et comme valeur de consigne la valeur (MAX) maximum ou l'inverse de la valeur (MAX) maximum, si et dès que les valeurs absolues des courants (I1, I2, I3) de phase deviennent inférieures à la distance minimum à la valeur (MAX) maximum, et
- dans lequel le dispositif (15b) de commutation est conçu pour passer du fonctionnement en court-circuit à nouveau dans le fonctionnement normal, si et dès que la courbe de tension, provoquée par la commande des unités (3) de phase, a, derrière le dispositif (6) de filtrage, à nouveau l'amplitude (U0) déterminée à l'avance.

2. Dispositif de commande suivant la revendication 1,
dans lequel le dispositif de commande est conçu pour recevoir les courants (IC1, IC2, IC3) de filtrage comme grandeurs de mesure.

3. Dispositif de commande suivant la revendication 1,
dans lequel le dispositif de commande est conçu pour déterminer les courants (IC1, IC2, IC3) de filtrage à l'aide de grandeurs (I1, I2, I3, U1, U2, U3) de mesure relevées du côté de la sortie du convertisseur (2) et reçues par le dispositif de commande.

4. Dispositif de commande suivant la revendication 3,

- dans lequel le dispositif de commande a un dispositif (23) informatique et un dispositif (24) d'extrapolation,
- dans lequel le dispositif (23) (23) informatique est conçu pour déterminer les courants (IC1, IC2, IC3) de filtrage à un instant où les grandeurs (I1, I2, I3, IC1, IC2, IC3, U1, U2, U3) de mesure, à l'aide desquelles les courants (IC1, IC2, IC3) de filtrage sont déterminés, sont relevées,
- dans lequel le dispositif (23) informatique est conçu pour envoyer les courants (IC1') de filtrage par lui déterminés au dispositif (24) d'extrapolation,
- dans lequel le dispositif (24) d'extrapolation est conçu pour modifier les courants (IC1') de filtrage, qui lui sont envoyés, de manière à les extrapoler d'un temps d'extrapolation par rapport à une fréquence nominale des tensions (U1, U2, U3) de phase,
- dans lequel le dispositif (24) d'extrapolation est conçu pour envoyer au dispositif (15b) de commutation les courants (IC1') de filtrage par lui modifiés.

5. Dispositif de commande suivant la revendication 3,

- dans lequel le dispositif de commande a un dispositif (23) informatique et un dispositif (24) d'extrapolation,
- dans lequel le dispositif (24) d'extrapolation est conçu pour modifier les grandeurs (I1, I2, I3, IC1, IC2, IC3, U1, U2, U3) de mesure, à l'aide desquelles les courants (IC1, IC2, IC3) de filtrage sont déterminés de manière à ce qu'ils soient extrapolés d'un temps d'extrapolation rapporté à une fréquence nominale des tensions (U1, U2, U3) de phase par rapport à un instant où les grandeurs (I1, I2, I3, IC1, IC2, IC3, U1, U2, U3) de mesure sont relevées,
- dans lequel le dispositif (24) d'extrapolation est conçu pour envoyer au dispositif (23) informatique les grandeurs I1, I2, I3, IC1, IC2, IC3, U1, U2, U3) de mesure par lui modifiées et
- dans lequel le dispositif (23) informatique est conçu pour déterminer les courants (IC1, IC2, IC3) de filtrage à l'aide des grandeurs (I1, I2, I3, IC1, IC2, IC3, U1, U2, U3) de mesure modifiées, qui lui sont envoyés, et pour envoyer les grandeurs (IC1, IC2, IC3) de filtrage au dispositif (15b) de commutation.

6. Dispositif de commande suivant la revendication 3,

- dans lequel le dispositif de commande est conçu pour recevoir des tensions (U1, U2, U3) de phase, relevées dans ou derrière le dispositif (6) de filtrage, des lignes (5) de phase,
- dans lequel le donneur (25) de valeur de consigne est constitué sous la forme d'un régleur de tension, auquel les tensions (U1, U2, U3) de phase relevées et des tensions (U1*, U2*, U3*) de phase de consigne sont envoyées et qui est conçu pour déterminer, à l'aide des tensions (U1, U2, U3) de phase relevées et des tensions (U1*, U2*, U3*) de phase de consigne, les courants (IC1*, IC2*, IC3*) de filtrage de consigne.

7. Dispositif de commande suivant la revendication 6,

- dans lequel le dispositif de commande a des dispositifs (28) pilotes, auxquels les tensions (U1*, U2*, U3*) de phase de consigne sont envoyées et qui sont conçus pour, à l'aide des tensions (U1*, U2*, U3*) de phase de consigne, déterminer des valeurs (IC1V) pilotes pour les courants de filtrage de consigne déterminés par les donneurs (25) de valeur de consigne, et
- dans lequel les valeurs (IC1V) pilotes sont appliquées au courant de filtrage de consigne déterminé par les donneurs (25) de valeur de consigne.

8. Dispositif de commande suivant la revendication 7,

- dans lequel le nombre de phases est d'au moins 3,
- dans lequel le dispositif de commande a un dispositif (30) de détermination de tension, qui est conçu pour recevoir les tensions (U1, U2, U3) de phase, relevées dans ou derrière le dispositif (6) de filtrage, des lignes (5) de phase et pour déterminer pour les tensions (U1, U2, U3) de phase respectivement une amplitude (U1M, U2M, U3M) fournie à un point (29) neutre et
- dans lequel le dispositif de commande a pour les phases respectivement un régleur (32) d'amplitude, auquel sont envoyées comme valeur réelle l'amplitude (U1M, U2M, U3M) respective et comme valeur de consigne la valeur (UM) moyenne des amplitudes (U1M, U2M, U3M) et qui est conçu pour, à l'aide de sa valeur (U1M, U2M, U3M) réelle respective et de sa valeur (UM) de consigne respective, déterminer une première valeur (k11, k12, k13) de correction respective du courant de filtrage de consigne respectif et corriger le courant (IC1*, IC2*, IC3*) de filtrage de consigne respectif de la première valeur (k11, k12, k13) de correction respective.

9. Dispositif de commande suivant la revendication 8,

- dans lequel le dispositif (30) de détermination de tension est conçu pour déterminer pour les tensions (U1, U2, U3) de phase respectivement une proportion (G1, G2, G3) respective de tension continue fournie au point (29) neutre,
- dans lequel le dispositif de commande a pour les phases respectivement un régleur (34) de décalage, qui est conçu pour recevoir la proportion (G1, G2, G3) respective de tension continue et pour déterminer, à l'aide de la proportion (G1, G2, G3) respective de tension continue, une deuxième valeur (k21, k22, k23) de correction respective pour le courant (IC1)\*, IC2\*, IC3\*) de filtrage de consigne respective et pour corriger le courant (IC1\*, IC2\*, IC3\*) de filtrage de consigne respectif de la deuxième valeur (k21, k22, k23) de correction respective qui a été déterminée.

10. Dispositif de commande suivant la revendication 9,

dans lequel le dispositif (30) de détermination de la tension est conçu pour recevoir, pour la détermination des proportions (G1, G2, G3) de tension continue des tensions (U1, U2, U3) de phase pendant un laps de temps (T1, T2, T3) de relevé respectif, respectivement une pluralité de tensions (U1, U2, U3) de phase relevées et pour déterminer la proportion (G1, G2, G3) respective de tension continue comme sa valeur moyenne respective, dans lequel le dispositif de commande est conçu pour déterminer le laps de temps (T1, T2, T3) de relevé respectif pour les phases individuellement et indépendamment des laps de temps (T1, T2, T3) de relevé pour les autres phases.

11. Dispositif de commande suivant l'une des revendications précédentes,

dans lequel le dispositif de commande est constitué sous la forme d'un dispositif de commande programmable, dans lequel le dispositif de commande est programmé par un programme (13) de commande et dans lequel le programme (13) de commande comprend des codes (14) de machine, par lesquels le dispositif de commande est constitué en dispositif de commande suivant l'une des revendications 1 à 9.

12. Programme de commande d'un dispositif (12) de commande programmable d'un convertisseur (2) dans lequel le programme de commande comprend des codes (14) de machine par lesquels le dispositif (12) de commande est constitué suivant l'une des revendications 1 à 10.

13. Unité de convertisseur,

- dans lequel l'unité de convertisseur a un convertisseur (2) qui est conçu pour mettre, pour un certain nombre de phases sur respectivement une ligne (5) de phase par une unité (3) respective de phase du convertisseur (2), en alternance respective un potentiel (U+) haut disponible du côté de l'entrée du convertisseur (2) et un potentiel (U-) bas disponible du côté de l'entrée du convertisseur (2) et injecter ainsi des courants (I1, I2, I3) de phase dans les lignes (5) de phase,
- dans lequel l'unité de convertisseur a un dispositif (6) de filtrage qui est monté en aval du convertisseur (2) et par lesquels passent les courants (I1, I2, I3) de phase,
- dans lequel le dispositif (6) de filtrage est conçu pour, par un certain nombre de condensateurs (8) de filtrage montés mutuellement entre les lignes (5) de phase en des points (7) de connexion des lignes (5) de phase ou par un certain nombre de condensateurs (8) de filtrage connectés à respectivement l'une des lignes (5) de phase, prélever sur les lignes (5) de phase des courants (IC1, IC2, IC3) de filtrage et envoyer les parties restantes des courants (I1, I2, I3) de phase à une charge (9) électrique comme courant (IL1, IL2, IL3) de charge,
- dans lequel l'unité de convertisseur a un dispositif (12) de commande suivant l'une des revendications 1 à 11, qui est conçu pour commander le convertisseur (2).

# FIG 1

# FIG 2

FIG 3

FIG 4

FIG 5

FIG 6

FIG 7

**FIG 8**

**FIG 9**

FIG 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20150036397 A1

**In der Beschreibung aufgeführte Nicht-Patentliteratur**

- **NATHANIAL BOTTRELL et al.** Comparison of Current-Limiting Strategies During Fault Ride-Through of Inverters to Prevent Latch-Up and Wind-Up. *IEEE Transactions on Power Electronics,* Juli 2014, vol. 29 (7), 3786-3797

- **SUBHAJYOTI MUKHERJEE et al.** Filter Capacitor Current Estimation and Grid Current Control in LCL-based Grid Connected Inverter. *IEEE Energy Conversion Congress and Exposition (ECCE),* 2017, 3885-3889